(19) Europäisches Patentamt
European Patent Office
Office européen des brevets

(11) EP 1 399 117 B1

(12) **FASCICULE DE BREVET EUROPEEN**

(45) Date de publication et mention de la délivrance du brevet:
**02.11.2006 Bulletin 2006/44**

(21) Numéro de dépôt: **02760357.0**

(22) Date de dépôt: **11.06.2002**

(51) Int Cl.:
***A61Q 5/06*** *(2006.01)* ***A61Q 5/10*** *(2006.01)*
***A61K 8/49*** *(2006.01)* ***C09B 44/12*** *(2006.01)*
***C09B 44/16*** *(2006.01)* ***C09B 44/18*** *(2006.01)*
***C09B 44/20*** *(2006.01)*

(86) Numéro de dépôt international:
**PCT/FR2002/001990**

(87) Numéro de publication internationale:
**WO 2002/100368 (19.12.2002 Gazette 2002/51)**

(54) **COMPOSITION POUR LA TEINTURE DES FIBRES KERATINIQUES COMPRENANT UN COLORANT DIAZOÏQUE DICATIONIQUE PARTICULIER**

EINE DIKATIONISCHEN DIAZOFARBSTOFF ENTHALTENDE FARBSTOFFZUSAMMENSETZUNG ZUM FÄRBEN VON KERATINISCHEN FASERN

DYEING COMPOSITION FOR KERATINOUS FIBRES COMPRISING A PARTICULAR DICATIONIC DIAZO DYE

(84) Etats contractants désignés:
**AT BE CH CY DE DK ES FI FR GB GR IE IT LI LU MC NL PT SE TR**

(30) Priorité: **11.06.2001 FR 0107614**

(43) Date de publication de la demande:
**24.03.2004 Bulletin 2004/13**

(73) Titulaire: **L'ORÉAL**
**75008 Paris (FR)**

(72) Inventeur: **VIDAL, Laurent**
**F-75013 Paris (FR)**

(74) Mandataire: **Wattremez, Catherine**
**L'OREAL - D.I.P.I.**
**25-29 Quai Aulagnier**
**92600 Asnières (FR)**

(56) Documents cités:
**EP-A- 0 482 508** **FR-A- 2 741 798**
**US-A- 3 100 739** **US-A- 3 912 708**

- **H. GOTTHARDT ET AL: "Neue elektrophile Substitutionen und 1,4-Dipolare Cycloadditionen in der Pyrimidinium-4-olat-Reihe" CHEMISCHE BERICHTE., vol. 118, 1985, pages 4578-4587, XP002192635 WEINHEIM DE**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 399 117 B1

## Description

L'invention a pour objet une nouvelle composition tinctoriale pour la teinture des fibres kératiniques, en particulier des fibres kératiniques humaines et plus particulièrement des cheveux, comprenant un colorant diazoïque dicationique particulier, ainsi que le procédé de teinture des fibres kératiniques mettant en oeuvre une telle composition. L'invention a aussi pour objet des colorants dicationiques diazoïques nouveaux.

Il est connu de teindre les fibres kératiniques et en particulier les cheveux humains avec des compositions tinctoriales contenant des précurseurs de colorant d'oxydation, appelés généralement bases d'oxydation, tels que des ortho ou paraphénylènediamines, des ortho ou paraaminophénols et des composés hétérocycliques. Ces bases d'oxydation sont des composés incolores ou faiblement colorés qui, associés à des produits oxydants, donnent naissance par un processus de condensation oxydative à des composés colorés.

On sait également que l'on peut faire varier les nuances obtenues avec ces bases d'oxydation en les associant à des coupleurs ou modificateurs de coloration, ces derniers étant choisis notamment parmi les métadiamines aromatiques, les métaaminophénols, les métadiphénols et certains composés hétérocycliques tels que des composés indoliques.

La variété des molécules mises en jeu au niveau des bases d'oxydation et des coupleurs permet l'obtention d'une riche palette de couleurs.

Ce procédé de coloration d'oxydation consiste à appliquer sur les fibres kératiniques, des bases d'oxydation ou un mélange de bases d'oxydation et de coupleurs avec un agent oxydant, par exemple de l'eau oxygénée, à laisser pauser, puis à rincer les fibres. Les colorations qui en résultent sont permanentes, puissantes, et résistantes aux agents extérieurs, notamment à la lumière, aux intempéries, aux lavages, à la transpiration et aux frottements. Généralement appliquées à pH basique, il permet d'obtenir une teinture et simultanément un éclaircissement de la fibre qui se traduit en pratique par la possibilité d'obtenir une coloration finale plus claire que la couleur d'origine. En outre, l'éclaircissement de la fibre a pour effet avantageux d'engendrer une couleur unie dans le cas des cheveux gris, et dans le cas dé cheveux naturellement pigmentés, de faire ressortir la couleur, c'est à dire de la rendre plus visible.

Il est aussi connu de teindre les fibres kératiniques par une coloration directe. Le procédé classiquement utilisé en coloration directe consiste à appliquer sur les fibres kératiniques des colorants directs qui sont des molécules colorées et colorantes ayant une affinité pour les fibres, à laisser pauser, puis à rincer les fibres.

Il est connu par exemple d'utiliser des colorants directs appartenant à la classe des nitrés benzéniques, des anthraquinones, des nitropyridines, des azoïques, des indoamines, des azines ou des triarylméthanes.

Les colorations qui en résultent sont des colorations particulièrement chromatiques qui sont cependant temporaires ou semi-permanentes car la nature des interactions qui lient les colorants directs à la fibre kératinique, et leur désorption de la surface et/ou du coeur de la fibre sont responsables de leur faible puissance tinctoriale et de leur mauvaise tenue aux lavages ou à la transpiration. Ces colorants directs sont en outre généralement sensibles à la lumière du fait de la faible résistance du chromophore vis-à-vis des attaques photochimiques et conduisent dans le temps à un affadissement de la coloration des cheveux. En outre, leur sensibilité à la lumière est dépendante de leur répartition uniforme ou en agrégats dans la fibre kératinique.

Il est connu d'utiliser des colorants directs en combinaison avec des agents oxydants. Cependant, les colorants directs sont généralement sensibles à l'action des agents oxydants tels que l'eau oxygénée, et des agents réducteurs tels que le bisulfite de sodium, ce qui les rend généralement difficilement utilisables dans les compositions de teinture directe éclaircissante à base d'eau oxygénée et à base d'un agent alcalinisant ou dans des compositions de teinture d'oxydation en association avec des précurseurs du type bases d'oxydation ou coupleurs.

Par exemple, il a été proposé dans les demandes de brevets FR-1 584 965 et JP-062 711 435 de teindre les cheveux avec des compositions de teinture à base de colorants directs nitrés et/ou de colorants dispersés azoïques et d'eau oxygénée ammoniacale en appliquant sur les cheveux un mélange desdits colorants et dudit oxydant, réalisé juste avant l'emploi. Mais les colorations obtenues se sont révélées insuffisamment tenaces et disparaissent aux shampooings en laissant apparaître l'éclaircissement de la fibre capillaire. Une telle coloration devient inesthétique en évoluant au cours du temps.

On a également proposé dans les demandes de brevets JP-53 95693 et JP-55 022638 de teindre les cheveux avec des compositions à base de colorants directs cationiques de type oxazine et d'eau oxygénée ammoniacale, en appliquant sur les cheveux, dans une première étape, de l'eau oxygénée ammoniacale, puis dans une seconde étape, une composition à base du colorant direct oxazinique. Cette coloration n'est pas satisfaisante, en raison du fait qu'elle nécessite un procédé rendu trop lent par les temps de pause des deux étapes successives. Si par ailleurs on applique sur les cheveux un mélange extemporané du colorant direct oxazinique avec de l'eau oxygénée ammoniacale, on ne colore pas ou du moins, on obtient une coloration de la fibre capillaire qui est presque inexistante.

Plus récemment, la demande de brevet FR 2 741 798 a décrit des compositions tinctoriales contenant des colorants directs comportant au moins un atome d'azote quaternisé du type azoïque ou azométhine, lesdites compositions étant à mélanger extemporanément à pH basique à une composition oxydante. Ces compositions permettent d'obtenir

des colorations avec des reflets homogènes, tenaces et brillants. Cependant, elles ne permettent pas de teindre les fibres kératiniques avec autant de puissance qu'avec des compositions de coloration d'oxydation.

Il existe donc un réel besoin de rechercher des colorants directs chromatiques qui permettent de teindre les fibres kératiniques aussi puissamment que les colorants d'oxydation, qui soient aussi stables qu'eux à la lumière, soient également résistants aux intempéries, aux lavages et à la transpiration, et en outre, suffisamment stables en présence d'agents oxydants et réducteurs pour pouvoir obtenir simultanément un éclaircissement de la fibre soit par l'utilisation de compositions directes éclaircissantes les contenant, soit par l'utilisation de compositions de coloration d'oxydation les contenant. Il existe aussi un réel besoin de rechercher des colorants directs qui permettent de teindre les fibres kératiniques pour obtenir une gamme très large de couleurs, en particulier très chromatiques, sans oublier les nuances dites « fondamentales » comme les noirs et les marrons.

Ces buts sont atteints avec la présente invention qui a pour objet une composition pour la teinture des fibres kératiniques, en particulier des fibres kératiniques humaines et plus particulièrement des cheveux, comprenant au moins un colorant diazoïque dicationique de formule (I) suivante :

$$W_1-N=N-W_2-N=N-W_3$$

Formule (I)

dans laquelle

- $W_1$ et $W_3$, indépendamment l'un de l'autre, représente un radical hétéroaromatique représentés par les formules (II) et (III) suivantes :

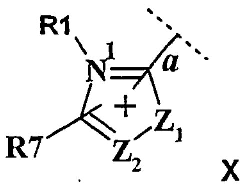

(II)

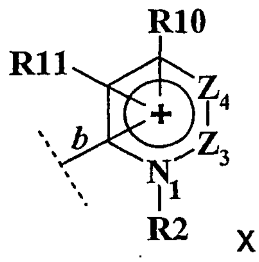

(III)

- $W_2$ représente un groupement aromatique carboné, pyridinique ou pyridazinyle de formule (IV)

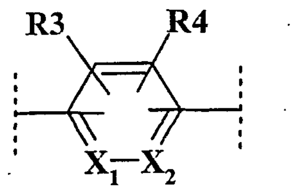

( IV )

formules (II); (III), (IV), dans lesquelles :

- $X_1$ représente un atome d'azote ou un radical $CR_5$
- $X_2$ représente un atome d'azote ou un radical $CR_6$
- $Z_1$ représente un atome d'oxygène, de soufre ou un radical $NR_6$,
- $Z_2$ représente un atome d'azote ou un radical $CR_9$,
- $Z_3$ représente un atome d'azote ou un radical $CR_{12}$,
- $Z_4$ représente un atome d'azote ou un radical $CR_{13}$,

- la liaison a du cycle cationique à 5 chaînons de la formule (II) est reliée au groupement azoïque de la formule (I),
- la liaison b du cycle cationique à 6 chaînons de la formule (III) est reliée au groupement azoïque de la formule (I)
- $R_3$, $R_4$, $R_5$, $R_6$, $R_7$, $R_9$, $R_{10}$, $R_{11}$, $R_{12}$, $R_{13}$ , représentent, ensemble ou indépendamment l'un de l'autre, un atome d'hydrogène, une chaîne hydrocarbonée en $C_1$-$C_{16}$ linéaire ou ramifiée, saturée ou insaturée, pouvant former un ou plusieurs cycles carbonés comportant de 3 à 6 chaînons, dont un ou plusieurs atomes de carbone de la chaîne carbonée peuvent être remplacés par un atome d'oxygène, d'azote ou de soufre ou par un groupement $SO_2$, et dont les atomes de carbone peuvent être, indépendamment les uns des autres, substitués par un ou plusieurs atomes d'halogènes ; $R_3$, $R_4$, $R_5$, $R_6$, $R_7$, $R_9$, $R_{10}$, $R_{11}$, $R_{12}$, $R_{13}$, ne comportant pas de liaison peroxyde, ni de radicaux diazo ou nitroso,
- $R_7$ avec $R_9$, $R_{10}$ avec $R_{11}$ et $R_{12}$ avec $R_{13}$ peuvent former un cycle aromatique carboné, tel qu'un phényle,
- $R_1$, $R_2$ et $R_8$ représentent un radical alkyle en $C_1$-$C_8$ linéaire ou ramifié, éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_1$-$C_2$, carboxy ou sulfonique ; un radical phényle éventuellement substitué,

X est un anion organique ou minéral.

Selon l'invention, lorsqu'il est indiqué qu'un ou plusieurs des atomes de carbone de la chaîne hydrocarbonée définie pour les radicaux $R_3$, $R_4$, $R_5$, $R_6$, $R_7$, $R_9$, $R_{10}$, $R_{11}$, $R_{12}$, $R_{13}$ , peuvent être remplacés par un atome d'oxygène, d'azote ou de soufre ou par un groupement $SO_2$, et/ou que ces chaines hydrocarbonées sont insaturées, cela signifie que l'on peut, à titre d'exemple, faire les transformations suivantes :

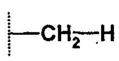 peut devenir 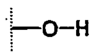

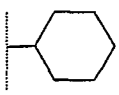 peut devenir 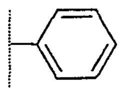

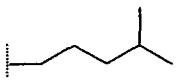 peut devenir 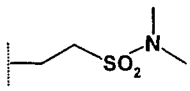

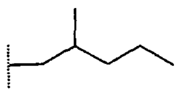 peut devenir 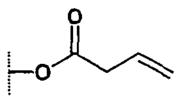

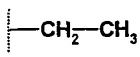 peut devenir 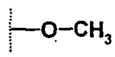

En particulier, on entend par "chaîne hydrocarbonée ramifiée", une chaîne pouvant former un ou plusieurs cycles carbonés comportant de 3 à 6 chaînons. On entend par chaîne hydrocarbonée insaturée, une chaîne pouvant comporter une ou plusieurs liaisons doubles et/ou une ou plusieurs liaisons triples, cette chaîne hydrocarbonée pouvant conduire à des groupements aromatiques.

X est un anion organique ou minéral par exemple choisi parmi un halogénure tel que chlorure, bromure, fluorure, iodure ; un hydroxyde ; un sulfate ; un hydrogénosulfate ; un alkyl($C_1$-$C_6$)sulfate tel que par exemple un méthylsulfate ou un éthylsulfate ; un acétate ; un tartrate ; un oxalate ; un alkyl($C_1$-$C_6$)sulfonate tel que méthylsulfonate ; un arylsulfonate substitué ou non substitué par un radical alkyle en $C_1$-$C_4$ tel que par exemple un 4-toluylsulfonate.

$R_3$, $R_4$, $R_5$, $R_6$, $R_{10}$, $R_{11}$, $R_{12}$, $R_{13}$, représentent, préférentiellement et indépendamment l'un de l'autre, un atome d'hydrogène ; un radical alkyle en $C_1$-$C_4$ linéaire ou ramifié, éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_1$-$C_2$, carboxy ou sulfonique; un radical phényle éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_1$-$C_2$, carboxy, sulfonique ou un atome d'halogène tel que chlore, fluor ou brome ; un radical carboxy ; un radical sulfonylamino ; un radical

sulfonique ; un radical alcoxy en C1-C2 ; un radical (poly)-hydroxyalcoxy en $C_2$-$C_4$ ; un radical amino ; un radical (di) alkylamino en $C_1$-$C_2$ ; un radical (poly)-hydroxyalkylamino en $C_2$-$C_4$.

Plus préférentiellement, $R_3$, $R_4$, $R_5$, $R_6$, $R_{10}$, $R_{11}$, $R_{12}$, $R_{13}$ représentent un atome d'hydrogène, un radical alkyle en $C_1$-$C_4$ éventuellement substitué par un ou plusieurs radicaux choisis parmi les radicaux hydroxy, amino, (di) alkylamino en $C_1$-$C_2$ ; un radical carboxy ; un radical alcoxy en $C_1$-$C_2$ ; un radical amino ; un radical (di)alkylamino en $C_1$-$C_2$ ; un radical (poly)-hydroxyalkylamino en $C_2$-$C_4$.

Selon un mode de réalisation particulièrement préféré, $R_3$, $R_4$, $R_5$, $R_6$, $R_{10}$, $R_{11}$, $R_{12}$, $R_{13}$, représentent un atome d'hydrogène, un radical méthyle, phényle, 2-hydroxyméthyle, un carboxy, un radical méthoxy, éthoxy, 2-hydroxyéthyloxy, un radical amino, méthylamino, diméthylamino, 2-hydroxyéthylamino.

$R_7$ et $R_9$ représentent, indépendamment l'un de l'autre, un atome d'hydrogène ; un radical alkyle en $C_1$-$C_4$ linéaire ou ramifié, éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_1$-$C_2$, carboxy ou sulfonique ; un radical phényle éventuellement substitué ; un radical carboxy ; un radical sulfonylamino.

Parmi ces substituants, $R_7$ et $R_9$ représentent préférentiellement un atome d'hydrogène, un radical phényle, un radical alkyle en $C_1$-$C_4$ éventuellement substitué par un ou plusieurs radicaux choisis parmi les radicaux hydroxy, amino, (di)alkylamino en $C_1$-$C_2$, carboxy.

Selon un mode de réalisation particulièrement préféré, $R_7$ et $R_9$ représentent préférentiellement un atome d'hydrogène, un radical méthyle, phényle, 2-hydroxyméthyle, un carboxy.

$R_1$, $R_2$ et $R_8$ représente préférentiellement un radical alkyle en $C_1$-$C_4$ éventuellement substitué par un ou plusieurs radicaux choisis parmi les radicaux hydroxy, alcoxy en $C_1$-$C_2$, amino, (di)alkylamino en $C_1$-$C_2$, carboxy, sulfonique.

Selon un mode de réalisation particulièrement préféré $R_1$, $R_2$ et $R_8$ représente préférentiellement un radical méthyle, éthyle, 2-hydroxyéthyle, 1-carboxyméthyle, 2- carboxyéthyle, 2-sulfonyléthyle.

$W_1$ et $W_3$ représentent, préférentiellement, indépendamment l'un de l'autre, un groupe cationique imidazolium, triazolium, thiazolium, pyridinium substitué par les radicaux préférés $R_1$, $R_7$ $R_{10}$, $R_{11}$, $R_{12}$, $R_{13}$.

$W_2$ représente préférentiellement un groupe phényle ou pyridyle substitué par les radicaux préférés $R_3$, $R_4$ $R_5$, $R_6$.

La concentration en colorant dicationique diazoique de formule (I) peut varier de 0,001 à 5% en poids environ par rapport au poids total de la composition tinctoriale, et de préférence d'environ 0,05 à 2%.

Parmi les colorants dicationiques diazoïques de formule (I) selon la présente invention, on peut notamment citer les composés suivants :

1,3-diméthyl-2-[4-(1,3-diméthyl-(imidazol-1-ium)-2-ylazo)-phénylazo]-imidazol-1-ium.
1,4-diméthyl-3-[4-(1,4-diméthyl-(triazol-2-ium)-3-ylazo)-phénylazo]-triazol-2-ium.
1-méthyl-2-[4-(1-méthyl-(pyridin-1-ium)-2-ylazo)-phénylazo]- pyridin -1-ium.
1-méthyl-3-[4-(1-méthyl-(pyridin-1-ium)-3-ylazo)-phénylazo]- pyridin -1-ium.
1,3-diméthyl-2-[4-(3-méthyl-(thiazol-3-ium)-2-ylazo)-phénylazo]-imidazol-1-ium.
1,4-diméthyl -3-[4-(3-méthyl -(thiazol-3-ium)-2-ylazo)-phénylazo]-triazol-2-ium.
1,3-diméthyl-2-[4-(1,4-diméthyl -(triazol-2-ium)-3-ylazo)-phényiazo]-imidazol-1-ium.

1-méthyl-2-[4-(3-méthyl-(thiazol-3-ium)-2-ylazo)-phénylazo]- pyridin -1-ium.
1-méthyl-3-[4-(3-méthyl-(thiazol-3-ium)-2-ylazo)-phénylazo]- pyridin -1-ium.

1,3-diméthyl-2-[4-(1-méthyl-(pyridin-1-ium)-2-ylazo)-phénylazo]-imidazol-1-ium.
1,4-diméthyl -3-[4-(1-méthyl -(pyridin-1-ium)-2-ylazo)-phénylazo]-triazol-2-ium.
1,3-diméthyl-2-[4-(1-(2-hydroxyéthyl)-(pyridin-1-ium)-2-ylazo)-phénylazo]-imidazol-1-ium.
1,4-diméthyl -3-[4-(1-(2-hydroxyéthyl)-(pyridin-1-ium)-2-ylazo)-phénylazo]-triazol-2-ium.

1,3-diméthyl-2-[4-(1-méthyl-(pyridin-1-ium)-3-ylazo)-phénylazo]-imidazol-1-ium.
1,4-diméthyl -3-[4-(1-méthyl -(pyridin-1-ium)-3-ylazo)-phénylazo]-triazol-2-ium.
1,3-diméthyl-2-[4-(1-(2-hydroxyéthyl)-(pyridin-1-ium)-3-ylazo)-phénylazo]-imidazol-1-ium.
1,4-diméthyl -3-[4-(1-(2-hydroxyéthyl)-(pyridin-1-ium)-3-ylazo)-phénylazo]-triazol-2-ium.

1,3-diméthyl-2-[4-(1,3-diméthyl-(imidazol-1-ium)-2-ylazo)-3-méthoxyphénylazo]-imidazol-1-ium.

1,3-diméthyt-2-[4-(1,4-diméthyl-(triazol-2-ium)-3-ylazo)-3-méthoxyphénylazo]-imidazol-1-ium.

1,3-diméthyl-2-[4-(1-méthyl-(pyridin-1-ium)-2-ylazo)-3-méthoxyphénylazo]-imidazol-1-ium.

## Synthèse des composés de l'invention

Les méthodes d'obtention desdits composés s'appuient sur des réactions déjà bien connues dans la littérature et relatées par exemple dans les documents suivants : US-3 291788, GB-1186 753, US-3 271 383, EP-0757 083 et US-5 708 151.

- Un premier principe de synthèse consiste à faire réagir un azoïque hétérocyclique cationique **1** sur un des atomes d'azote de l'hétérocycle en série 4-méthoxyphénylazo avec un dérivé d'hydrazone hétérocyclique à 5 ou 6 chaînons **2** ou **2'** dans un solvant protique à une température comprise entre 25°C et 150°C. Les composés **3** et **3'** peuvent être ainsi obtenus. En particulier, l'hétérocycle quarternaire peut être un imidazolium, triazolium, thiazolium, thiadiazolium, oxazolium, un pyridinium ou un pyridazinium. Les composés **3** ou **3'** sont mis en réaction avec un oxydant, tel que par exemple l'oxygène, les persels ( par exemple le persulfate ), le ferrocyanure de potassium ou encore l'oxyde d'argent, dans un solvant protique à une température comprise entre 0°C et 80°C, pour conduire aux composés diazoïques dicationiques **4** et **4'** :

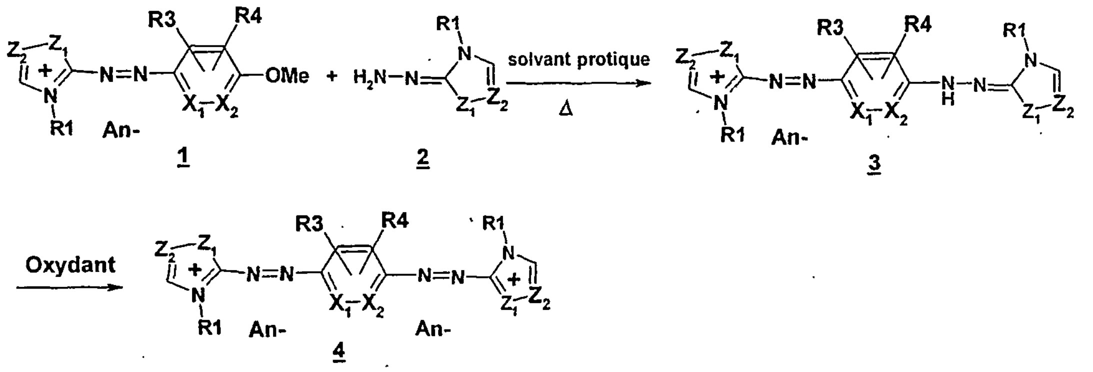

1 2 3 4

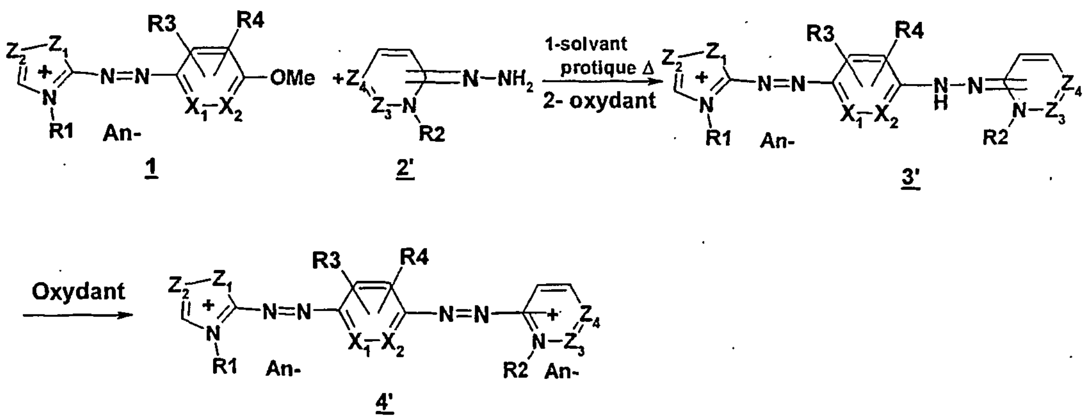

1 2' 3' 4'

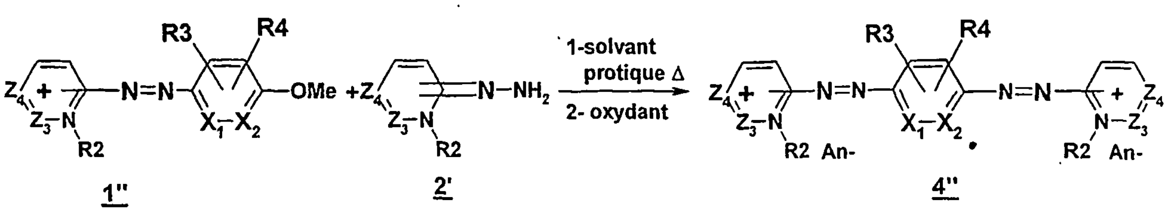

1" 2' 4"

Le même principe de synthèse peut être appliqué en partant des azoïques cationiques de **1"** pour conduire aux

composés diazoïques dicationiques 4".

- Un deuxième principe de synthèse consiste à faire réagir un hétérocycle à 5 chaînons tel qu'un imidazole, thiazole, thiadiazole, triazole ou oxazole sur le sel de diazonium dérivé de l'azoïque 5 (respectivement 9, obtenus selon les méthodes classiques de la littérature, voir références citées ci-dessus) à une température comprise entre -5°C et 50°C, dans un solvant protique et à pH acide. Le composé diazoïque 7 (respectivement 10) est ainsi obtenu et mis en réaction avec un halogénure d'alkyle ou un dialkylsulfate dans un solvant de point d'ébullition compris entre 60°C et 180°C pour conduire au composé diazoïque dicationique 4 (respectivement 11) :

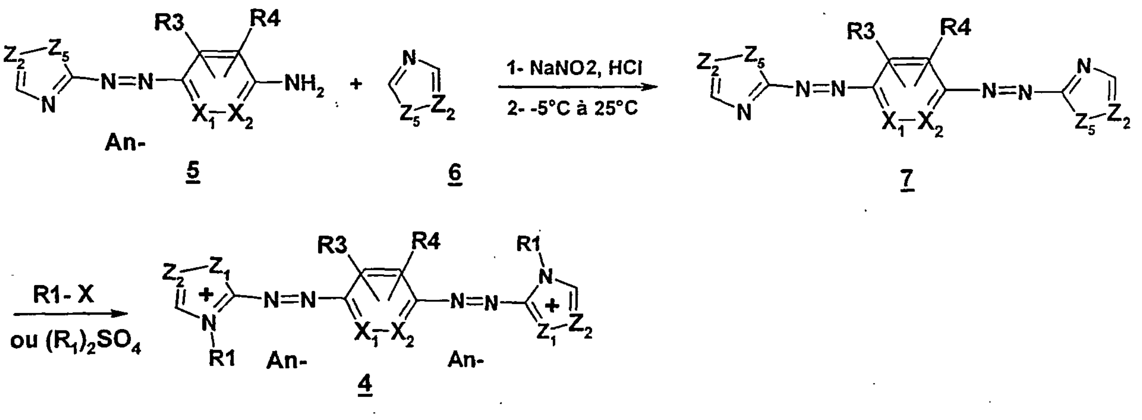


5 6 7

4

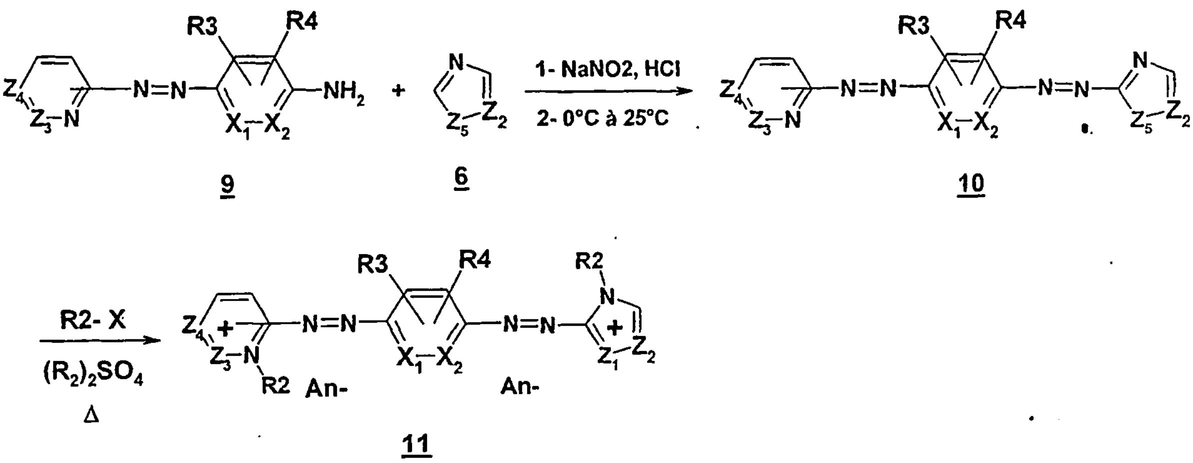


9 6 10

11

Le même principe de synthèse peut être appliqué à la condensation du sel de diazonium de l'azoïque 9 avec un hétérocycle à 6 chaînons pour conduire après alkylation au composé diazoïque dicationique 4" :

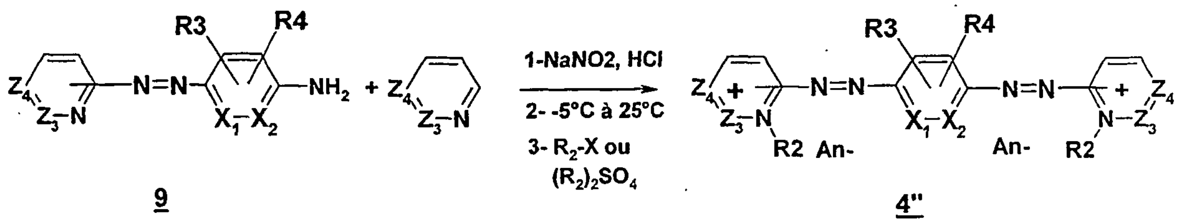


9 4"

Dans les formules du schéma de synthèse, Me désigne un radical $CH_3$.

La composition tinctoriale conforme à l'invention peut en outre contenir des colorants directs différents de ceux de formule (I), ces colorants pouvant notamment être choisis parmi les colorants directs nitrés benzéniques neutres, acides ou cationiques, les colorants directs azoïques neutres acides ou cationiques, les colorants directs quinoniques et en particulier anthraquinoniques neutres, acides ou cationiques, les colorants directs aziniques, les colorants directs méthiniques, les colorants directs triarylméthaniques, les colorants directs indoaminiques et les colorants directs naturels.

Parmi les colorants directs benzéniques utilisables selon l'invention, on peut citer notamment les composés suivants:

- 1,4-diamino-2-nitrobenzène
- 1-amino-2 nitro-4-β- hydroxyéthylaminobenzène
- 1-amino-2 nitro-4-bis(β-hydroxyéthyl)-aminobenzène
- 1,4-Bis(β-hydroxyéthylamino)-2-nitrobenzène
- 1-β-hydroxyéthylamino-2-nitro-4-bis-(β-hydroxyéthylamino)-benzène
- 1-β-hydroxyéthylamino-2-nitro-4-aminobenzène
- 1-β-hydroxyéthylamino-2-nitro-4-(éthyl)(β-hydroxyéthyl)-aminobenzène
- 1-amino-3-méthyl-4-β-hydroxyéthylamino-6-nitrobenzène
- 1-amino-2-nitro-4-β-hydroxyéthylamino-5-chlorobenzène
- 1,2-Diamino-4-nitrobenzène
- 1-amino-2-β-hydroxyéthylamino-5-nitrobenzène
- 1,2-Bis-(β-hydroxyéthylamino)-4-nitrobenzène
- 1-amino-2-tris-(hydroxyméthyl)-méthylamino-5-nitrobenzène
- 1-Hydroxy-2-amino-5-nitrobenzène
- 1-Hydroxy-2-amino-4-nitrobenzène
- 1-Hydroxy-3-nitro-4-aminobenzène
- 1-Hydroxy-2-amino-4,6-dinitrobenzène
- 1-β-hydroxyéthyloxy-2-β-hydroxyéthylamino-5-nitrobenzène
- 1-Méthoxy-2-β-hydroxyéthylamino-5-nitrobenzène
- 1-β-hydroxyéthyloxy-3-méthylamino-4-nitrobenzène
- 1-β,γ-dihydroxypropyloxy-3-méthylamino-4-nitrobenzène
- 1-β-hydroxyéthylamino-4-β,γ-dihydroxypropyloxy-2-nitrobenzène
- 1-β,γ-dihydroxypropylamino-4-trifluorométhyl-2-nitrobenzène
- 1-β-hydroxyéthylamino-4-trifluorométhyl-2-nitrobenzène
- 1-β-hydroxyéthylamino-3-méthyl-2-nitrobenzène
- 1-β-aminoéthylamino-5-méthoxy-2-nitrobenzène
- 1-Hydroxy-2-chloro-6-éthylamino-4-nitrobenzène
- 1-Hydroxy-2-chloro-6-amino-4-nitrobenzène
- 1-Hydroxy-6-bis-(β-hydroxyéthyl)-amino-3-nitrobenzène
- 1-β-hydroxyéthylamino-2-nitrobenzène
- 1-Hydroxy-4-β-hydroxyéthylamino-3-nitrobenzène.

Parmi les colorants directs azoïques utilisables selon l'invention on peut citer les colorants azoiques cationiques décrits dans les demandes de brevets WO 95/15144, WO-95/01772 et EP-714954 dont le contenu fait partie intégrante de l'invention.

Parmi ces composés on peut tout particulièrement citer les colorants suivants:

- chlorure de 1,3-diméthyl-2-[[4-(diméthylamino)phényl]azo]-1H-Imidazolium,
- chlorure de 1,3-diméthyl-2-[(4-aminophényl)azo]-1H-Imidazolium,
- méthylsulfate de 1-méthyl-4-[(méthylphénylhydrazono)méthyl]-pyridinium.

On peut également citer parmi les colorants directs azoïques les colorants suivants, décrits dans le COLOUR INDEX INTERNATIONAL 3e édition :

- Disperse Red 17
- Acid Yellow 9
- Acid Black 1

- Basic Red 22
- Basic Red 76
- Basic Yellow 57
- Basic Brown 16
- Acid Yellow 36
- Acid Orange 7
- Acid Red 33
- Acid Red 35
- Basic Brown 17
- Acid Yellow 23
- Acid Orange 24
- Disperse Black 9.

On peut aussi citer le 1-(4'-aminodiphénylazo)-2-méthyl-4bis-(β-hydroxyéthyl) aminobenzène et l'acide 4-hydroxy-3-(2-méthoxyphénylazo)-1-naphtalène sulfonique.

Parmi les colorants directs quinoniques on peut citer les colorants suivants :

- Disperse Red 15
- Solvent Violet 13
- Acid Violet 43
- Disperse Violet 1
- Disperse Violet 4
- Disperse Blue 1
- Disperse Violet 8
- Disperse Blue 3
- Disperse Red 11
- Acid Blue 62
- Disperse Blue 7
- Basic Blue 22
- Disperse Violet 15
- Basic Blue 99

ainsi que les composés suivants:

- 1-N-méthylmorpholiniumpropylamino-4-hydroxyanthraquinone
- 1-Aminopropylamino-4-méthylaminoanthraquinone
- 1-Aminopropylaminoanthraquinone
- 5-β-hydroxyéthyl-1,4-diaminoanthraquinone
- 2-Aminoéthylaminoanthraquinone
- 1,4-Bis-(β,γ-dihydroxypropylamino)-anthraquinone.

Parmi les colorants aziniques on peut citer les composés suivants :

- Basic Blue 17
- Basic Red 2.

Parmi les colorants triarylméthaniques utilisables selon l'invention, on peut citer les composés suivants:

- Basic Green 1
- Acid blue 9
- Basic Violet 3
- Basic Violet 14
- Basic Blue 7
- Acid Violet 49
- Basic Blue 26
- Acid Blue 7

Parmi les colorants indoaminiques utilisables selon l'invention, on peut citer les composés suivants :

- 2-β-hydroxyéthlyamino-5-[bis-(β-4'-hydroxyéthyl)amino]anilino-1,4-benzoquinone
- 2-β-hydroxyéthylamino-5-(2'-méthoxy-4'-amino)anilino-1,4-benzoquinone
- 3-N(2'-Chloro-4'-hydroxy)phényl-acétylamino-6-méthoxy-1,4-benzoquinone imine
- 3-N(3'-Chloro-4'-méthylamino)phényl-uréido-6-méthyl-1,4-benzoquinone imine
- 3-[4'-N-(Ethyl,carbamylméthyl)-amino]-phényl-uréido-6-méthyl-1,4-benzoquinone imine.

Parmi les colorants directs naturels utilisables selon l'invention, on peut citer la lawsone, la juglone, l'alizarine, la purpurine, l'acide carminique, l'acide kermésique, la purpurogalline, le protocatéchaldéhyde, l'indigo, l'isatine, la curcumine, la spinulosine, l'apigénidine. On peut également utiliser les extraits ou décoctions contenant ces colorants naturels et notamment les cataplasmes ou extraits à base de henné.

Le ou les colorants directs additionnels représentent de préférence de 0,001 à 20% en poids environ du poids total de la composition et encore plus préférentiellement de 0,005 à 10% en poids environ.

La composition de l'invention peut en outre comprendre un agent oxydant. Cet agent oxydant peut être n'importe quel agent oxydant utilisé de façon classique pour la décoloration des fibres kératiniques. L'agent oxydant est choisi de préférence parmi le peroxyde d'hydrogène, le peroxyde d'urée, les bromates de métaux alcalins, les persels tels que les perborates et les persulfates, les peracides et les enzymes parmi lesquelles on peut citer les peroxydases, les oxydo-réductases à 2 électrons telles que les uricases et les oxygénases à 4 électrons comme les laccases. L'utilisation du peroxyde d'hydrogène est particulièrement préférée.

La composition selon l'invention peut en outre comprendre une base d'oxydation. Cette base d'oxydation peut être choisie parmi les bases d'oxydation classiquement utilisées en teinture d'oxydation, par exemple les paraphénylènediamines, les bis-phénylalkylènediamines, les para-aminophénols, les ortho-aminophénols, les bases hétérocycliques, et leurs sels d'addition avec un acide.

Parmi les paraphénylènediamines, on peut plus particulièrement citer à titre d'exemple, la paraphénylènediamine, la paratoluylènediamine, la 2-chloro paraphénylènediamine, la 2,3-diméthyl paraphénylènediamine, la 2,6-diméthyl paraphénylènediamine, la 2,6-diéthyl paraphénylènediamine, la 2,5-diméthyl paraphénylènediamine, la N,N-diméthyl paraphénylènediamine, la N,N-diéthyl paraphénylènediamine, la N,N-dipropyl paraphénylènediamine, la 4-amino N,N-diéthyl 3-méthyl aniline, la N,N-bis-(β-hydroxyéthyl) paraphénylènediamine, la 4-N,N-bis-(β-hydroxyéthyl)amino 2-méthyl aniline, la 4-N,N-bis-(β-hydroxyéthyl)amino 2-chloro aniline, la 2-β-hydroxyéthyl paraphénylènediamine, la 2-fluoro paraphénylènediamine, la 2-isopropyl paraphénylènediamine, la N-(β-hydroxypropyl) paraphénylènediamine, la 2-hydroxyméthyl paraphénylènediamine, la N,N-diméthyl 3-méthyl paraphénylènediamine, la N,N-(éthyl, β-hydroxyéthyl) paraphénylènediamine, la N-(β,γ-dihydroxypropyl) paraphénylènediamine, la N-(4'-aminophényl) paraphénylènediamine, la N-phényl paraphénylènediamine, la 2-β-hydroxyéthyloxy paraphénylènediamine, la 2-β-acétylaminoéthyloxy paraphénylènediamine, la N-(β-méthoxyéthyl) paraphénylènediamine, la 4-aminophenyl pyrrolidine, le 2-thiényl paraphénylène diamine, le 2-β hydroxyéthylamino 5-amino toluène et leurs sels d'addition avec un acide.

Parmi les paraphénylènediamines citées ci-dessus, la paraphénylènediamine, la paratoluylènediamine, la 2-isopropyl paraphénylènediamine, la 2-β-hydroxyéthyl paraphénylènediamine, la 2-β-hydroxyéthyloxy paraphénylènediamine, la 2,6-diméthyl paraphénylènediamine, la 2,6-diéthyl paraphénylènediamine, la 2,3-diméthyl paraphénylènediamine, la N,N-bis-(β-hydroxyéthyl) paraphénylènediamine, la 2-chloro paraphénylènediamine, la 2-β-acétylaminoéthyloxy paraphénylènediamine, et leurs sels d'addition avec un acide sont particulièrement préférées.

Parmi les bis-phénylalkylènediamines, on peut citer à titre d'exemple, le N,N'-bis-(β-hydroxyéthyl) N,N'-bis-(4'-aminophényl) 1,3-diamino propanol, la N,N'-bis-(β-hydroxyéthyl) N,N'-bis-(4'-aminophényl) éthylènediamine, la N,N'-bis-(4-aminophényl) tétraméthylènediamine, la N,N'-bis-(β-hydroxyéthyl) N,N'-bis-(4-aminophényl) tétraméthylènediamine, la N,N'-bis-(4-méthyl-aminophényl) tétraméthylènediamine, la N,N'-bis-(éthyl) N,N'-bis-(4'-amino, 3'-méthylphényl) éthylènediamine, le 1,8-bis-(2,5-diamino phénoxy)-3,6-dioxaoctane, et leurs sels d'addition avec un acide.

Parmi les para-aminophénols, on peut citer à titre d'exemple, le para-aminophénol, le 4-amino 3-méthyl phénol, le 4-amino 3-fluoro phénol, le 4-amino 3-hydroxyméthyl phénol, le 4-amino 2-méthyl phénol, le 4-amino 2-hydroxyméthyl phénol, le 4-amino 2-méthoxyméthyl phénol, le 4-amino 2-aminométhyl phénol, le 4-amino 2-(β-hydroxyéthyl aminométhyl) phénol, le 4-amino 2-fluoro phénol, et leurs sels d'addition avec un acide.

Parmi les ortho-aminophénols, on peut citer à titre d'exemple, le 2-amino phénol, le 2-amino 5-méthyl phénol, le 2-amino 6-méthyl phénol, le 5-acétamido 2-amino phénol, et leurs sels d'addition avec un acide.

Parmi les bases hétérocycliques, on peut citer à titre d'exemple, les dérivés pyridiniques, les dérivés pyrimidiniques et les dérivés pyrazoliques.

Parmi les dérivés pyridiniques, on peut citer les composés décrits par exemple dans les brevets GB 1 026 978 et GB 1 153 196, comme la 2,5-diamino pyridine, la 2-(4-méthoxyphényl)amino 3-amino pyridine, la 2,3-diamino 6-méthoxy pyridine, la 2-(β-méthoxyéthyl)amino 3-amino 6-méthoxy pyridine, la 3,4-diamino pyridine, et leurs sels d'addition avec un acide.

Parmi les dérivés pyrimidiniques, on peut citer les composés décrits par exemple dans les brevets DE 2 359 399 ; JP 88-169 571 ; JP 05 163 124 ; EP 0 770 375 ou demande de brevet WO 96/15765 comme la 2,4,5,6-tétra-aminopyrimidine, la 4-hydroxy 2,5,6-triaminopyrimidine, la 2-hydroxy 4,5,6-triaminopyrimidine, la 2,4-dihydroxy 5,6-diaminopyrimidine, la 2,5,6-triaminopyrimidine, et les dérivés pyrazolo-pyrimidiniques tels ceux mentionnés dans la demande de brevet FR-A-2 750 048 et parmi lesquels on peut citer la pyrazolo-[1,5-a]-pyrimidine-3,7-diamine ; la 2,5-diméthyl pyrazolo-[1,5-a]-pyrimidine-3,7-diamine ; la pyrazolo-[1,5-a]-pyrimidine-3,5-diamine ; la 2,7-diméthyl pyrazolo-[1,5-a]-pyrimidine-3,5-diamine ; le 3-amino pyrazolo-[1,5-a]-pyrimidin-7-ol ; le 3-amino pyrazolo-[1,5-a]-pyrimidin-5-ol ; le 2-(3-amino pyrazolo-[1,5-a]-pyrimidin-7-ylamino)-éthanol, le 2-(7-amino pyrazolo-[1,5-a]-pyrimidin-3-ylamino)-éthanol, le 2-[(3-amino-pyrazolo[1,5-a]pyrimidin-7-yl)-(2-hydroxy-éthyl)-amino]-éthanol, le 2-[(7-amino-pyrazolo[1,5-a]pyrimidin-3-yl)-(2-hydroxy-éthyl)-amino]-éthanol, la 5,6-diméthyl pyrazolo-[1,5-a]-pyrimidine-3,7-diamine, la 2,6-diméthyl pyrazolo-[1,5-a]-pyrimidine-3,7-diamine, la 2, 5, N 7, N 7-tetraméthyl pyrazolo-[1,5-a]-pyrimidine-3,7-diamine, la 3-amino-5-méthyl-7-imidazolylpropylamino pyrazolo-[1,5-a]-pyrimidine et leurs sels d'addition avec un acide et leurs formes tautomères, lorsqu'il existe un équilibre tautomérique.

Parmi les dérivés pyrazoliques, on peut citer les composés décrits dans les brevets DE 3 843 892, DE 4 133 957 et demandes de brevet WO 94/08969, WO 94/08970, FR-A-2 733 749 et DE 195 43 988 comme le 4,5-diamino 1-méthyl pyrazole, le 4,5-diamino 1-(β-hydroxyéthyl) pyrazole, le 3,4-diamino pyrazole, le 4,5-diamino 1-(4'-chlorobenzyl) pyrazole, le 4,5-diamino 1,3-diméthyl pyrazole, le 4,5-diamino 3-méthyl 1-phényl pyrazole, le 4,5-diamino 1-méthyl 3-phényl pyrazole, le 4-amino 1,3-diméthyl 5-hydrazino pyrazole, le 1-benzyl 4,5-diamino 3-méthyl pyrazole, le 4,5-diamino 3-tert-butyl 1-méthyl pyrazole, le 4,5-diamino 1-tert-butyl 3-méthyl pyrazole, le 4,5-diamino 1-(β-hydroxyéthyl) 3-méthyl pyrazole, le 4,5-diamino 1-éthyl 3-méthyl pyrazole, le 4,5-diamino 1-éthyl 3-(4'-méthoxyphényl) pyrazole, le 4,5-diamino 1-éthyl 3-hydroxyméthyl pyrazole, le 4,5-diamino 3-hydroxyméthyl 1-méthyl pyrazole, le 4,5-diamino 3-hydroxyméthyl 1-isopropyl pyrazole, le 4,5-diamino 3-méthyl 1-isopropyl pyrazole, le 4-amino 5-(2'-aminoéthyl)amino 1,3-diméthyl pyrazole, le 3,4,5-triamino pyrazole, le 1-méthyl 3,4,5-triamino pyrazole, le 3,5-diamino 1-méthyl 4-méthylamino pyrazole, le 3,5-diamino 4-(β-hydroxyéthyl)amino 1-méthyl pyrazole, et leurs sels d'addition avec un acide.

La composition selon l'invention peut contenir en outre un ou plusieurs coupleurs conventionnellement utilisés pour la teinture de fibres kératiniques. Parmi ces coupleurs, on peut notamment citer les métaphénylènediamines, les métaaminophénols, les métadiphénols, les coupleurs naphtaléniques et les coupleurs hétérocycliques, et leurs sels d'addition avec un acide.

A titre d'exemple, on peut citer le 2-méthyl 5-aminophénol, le 5-N-(β-hydroxyéthyl)amino 2-méthyl phénol, le 6-chloro-2-méthyl-5-aminophénol, le 3-amino phénol, le 1,3-dihydroxy benzène, le 1,3-dihydroxy 2-méthyl benzène, le 4-chloro 1,3-dihydroxy benzène, le 2,4-diamino 1-(β-hydroxyéthyloxy) benzène, le 2-amino 4-(β-hydroxyéthylamino) 1-méthoxybenzène, le 1,3-diamino benzène, le 1,3-bis-(2,4-diaminophénoxy) propane, la 3-uréido aniline, le 3-uréido 1-diméthylamino benzène, le sésamol, le 1-β-hydroxyéthylamino-3,4-méthylènedioxybenzène, l'α-naphtol, le 2 méthyl-1-naphtol, le 6-hydroxy indole, le 4-hydroxy indole, le 4-hydroxy N-méthyl indole, la 2-amino-3-hydroxy pyridine, la 6-hydroxy benzomorpholine la 3,5-diamino-2,6-diméthoxypyridine, le 1-N-((β-hydroxyéthyl)amino-3,4-méthylène dioxybenzène, le 2,6-bis-(β-hydroxyéthylamino)toluène et leurs sels d'addition avec un acide.

Dans la composition de la présente invention, le ou les coupleurs sont en général présents en une quantité allant de 0,001 à 10 % en poids environ du poids total de la composition tinctoriale et plus préférentiellement de 0,005 à 6 %. La ou les bases d'oxydation sont présentes en une quantité allant de préférence de 0,001 à 10 % en poids environ du poids total de la composition tinctoriale, et plus préférentiellement de 0,005 à 6 %.

D'une manière générale, les sels d'addition avec un acide utilisables dans le cadre des compositions tinctoriales de l'invention pour les bases d'oxydation et les coupleurs sont notamment choisis parmi les chlorhydrates, les bromhydrates, les sulfates, les citrates, les succinates, les tartrates, les lactates, les tosylates, les benzènesulfonates, les phosphates et les acétates.

Le milieu approprié pour la teinture appelé aussi support de teinture est généralement constitué par de l'eau ou par un mélange d'eau et d'au moins un solvant organique pour solubiliser les composés qui ne seraient pas suffisamment solubles dans l'eau. A titre de solvant organique, on peut par exemple citer les alcanols inférieurs en $C_1$-$C_4$, tels que l'éthanol et l'isopropanol ; les polyols et éthers de polyols comme le 2-butoxyéthanol, le propylèneglycol, le monométhyléther de propylèneglycol, le monoéthyléther et le monométhyléther du diéthylèneglycol, ainsi que les alcools

aromatiques comme l'alcool benzylique ou le phénoxyéthanol, et leurs mélanges.

Les solvants organiques peuvent être présents dans des proportions de préférence comprises entre 1 et 40 % en poids environ par rapport au poids total de la composition tinctoriale, et encore plus préférentiellement entre 5 et 30 % en poids environ.

La composition tinctoriale conforme à l'invention peut également renfermer divers adjuvants utilisés classiquement dans les compositions pour la teinture des cheveux, tels que des agents tensio-actifs anioniques, cationiques, non-ioniques, amphotères, zwittérioniques ou leurs mélanges, des polymères anioniques, cationiques, non-ioniques, amphotères, zwittérioniques ou leurs mélanges, des agents épaississants minéraux ou organiques, et en particulier les polymères associatifs anioniques, cationiques, non ioniques et amphotères, des agents antioxydants, des agents de pénétration, des agents séquestrants, des parfums, des tampons, des agents dispersants, des agents de conditionnement tels que par exemple des silicones volatiles ou non volatiles, modifiées ou non modifiées, des agents filmogènes, des céramides, des agents conservateurs, des agents opacifiants.

Les adjuvants cités ci dessus sont en général présents en quantité comprise pour chacun d'eux entre 0,01 et 20 % en poids par rapport au poids de la composition.

Bien entendu, l'homme de l'art veillera à choisir ce ou ces éventuels composés complémentaires de manière telle que les propriétés avantageuses attachées intrinsèquement à la composition de teinture conforme à l'invention ne soient pas, ou substantiellement pas, altérées par la ou les adjonctions envisagées.

Le pH de la composition tinctoriale conforme à l'invention est généralement compris entre 3 et 12 environ, et de préférence entre 5 et 11 environ. Il peut être ajusté à la valeur désirée au moyen d'agents acidifiants ou alcalinisants habituellement utilisés en teinture des fibres kératiniques ou bien encore à l'aide de systèmes tampons classiques.

Parmi les agents acidifiants, on peut citer, à titre d'exemple, les acides minéraux ou organiques comme l'acide chlorhydrique, l'acide orthophosphorique, l'acide sulfurique, les acides carboxyliques comme l'acide acétique, l'acide tartrique, l'acide citrique, l'acide lactique, les acides sulfoniques.

Parmi les agents alcalinisants on peut citer, à titre d'exemple, l'ammoniaque, les carbonates alcalins, les alcanolamines telles que les mono-, di- et triéthanolamines ainsi que leurs dérivés, les hydroxydes de sodium ou de potassium et les composés de formule (III) suivante :

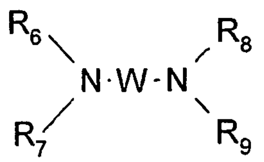
(III)

dans laquelle W est un reste propylène éventuellement substitué par un groupement hydroxyle ou un radical alkyle en $C_1$-$C_4$ ; $R_6$, $R_7$, $R_8$ et $R_9$, identiques ou différents, représentent un atome d'hydrogène, un radical alkyle en $C_1$-$C_4$ ou hydroxyalkyle en $C_1$-$C_4$.

La composition tinctoriale selon l'invention peut se présenter sous des formes diverses, telles que sous forme de liquides, de crèmes, de gels, ou sous toute autre forme appropriée pour réaliser une teinture des fibres kératiniques, et notamment des cheveux humains.

L'invention a aussi pour objet un procédé de teinture directe qui comprend l'application d'une composition tinctoriale contenant un colorant de formule (I) telle que définie précédemment sur les fibres kératiniques. Après un temps de pause, les fibres kératiniques sont rincées laissant apparaître des fibres colorées.

L'application sur les fibres de la composition tinctoriale contenant le colorant cationique azoïque de formule (I) peut être mise en oeuvre en présence d'agent oxydant ce qui provoque la décoloration de la fibre (teinture directe éclaircissante). Cet agent oxydant peut être ajouté à la composition contenant le colorant de formule (I) au moment de l'emploi ou directement sur la fibre kératinique.

L'invention a aussi pour objet un procédé de teinture d'oxydation qui comprend l'application sur les fibres d'une composition tinctoriale qui comprend un colorant de formule (I), au moins une base d'oxydation et optionnellement au moins un coupleur, en présence d'un agent oxydant.

La base d'oxydation, le coupleur et l'agent oxydant sont tels que définis précédemment.

La couleur peut être révélée à pH acide, neutre ou alcalin et l'agent oxydant peut être ajouté à la composition de l'invention juste au moment de l'emploi ou il peut être mis en oeuvre à partir d'une composition oxydante le contenant, appliquée sur les fibres simultanément ou séquentiellement à la composition tinctoriale.

Dans le cas de la teinture d'oxydation ou de la teinture directe éclaircissante, la composition tinctoriale est mélangée, de préférence au moment de l'emploi, à une composition contenant, dans un milieu approprié pour la teinture, au moins un agent oxydant, cet agent oxydant étant présent en une quantité suffisante pour développer une coloration. Le mélange obtenu est ensuite appliqué sur les fibres kératiniques. Après un temps de pause de 3 à 50 minutes environ,

de préférence 5 à 30 minutes environ, les fibres kératiniques sont rincées, lavées au shampooing, rincées à nouveau puis séchées.

La composition oxydante peut également renfermer divers adjuvants utilisés classiquement dans les compositions pour la teinture des cheveux et tels que définis précédemment.

Le pH de la composition oxydante renfermant l'agent oxydant est tel qu'après mélange avec la composition tinctoriale, le pH de la composition résultante appliquée sur les fibres kératiniques varie de préférence entre 3 et 12 environ, et encore plus préférentiellement entre 5 et 11. Il peut être ajusté à la valeur désirée au moyen d'agents acidifiants ou alcalinisants habituellement utilisés en teinture des fibres kératiniques et tels que définis précédemment.

La composition qui est finalement appliquée sur les fibres kératiniques peut se présenter sous des formes_ diverses, telles que sous forme de liquides, de crèmes, de gels ou sous toute autre forme appropriée pour réaliser une teinture des fibres kératiniques, et notamment des cheveux humains.

Un autre objet de l'invention est un dispositif à plusieurs compartiments ou "kit" de teinture dans lequel un premier compartiment renferme la composition tinctoriale de l'invention et un deuxième compartiment renferme la composition oxydante. Ce dispositif peut être équipé d'un moyen permettant de délivrer sur les cheveux le mélange souhaité, tel que les dispositifs décrits dans le brevet FR-2 586 913 au nom de la demanderesse.

Enfin l'invention a également pour objet les colorants diazoïques dicationiques de formule (I) telle que définie précédemment.

L'exemple qui suit sert à illustrer l'invention sans toutefois présenter un caractère limitatif.

**<u>Exemple :</u>**

Synthèse du 1,3-diméthyl-2-[4-(1,3-diméthyl-(imidazol-1-ium)-2-ylazo)-phénylazo]-imidazol-1-ium, dichlorate :

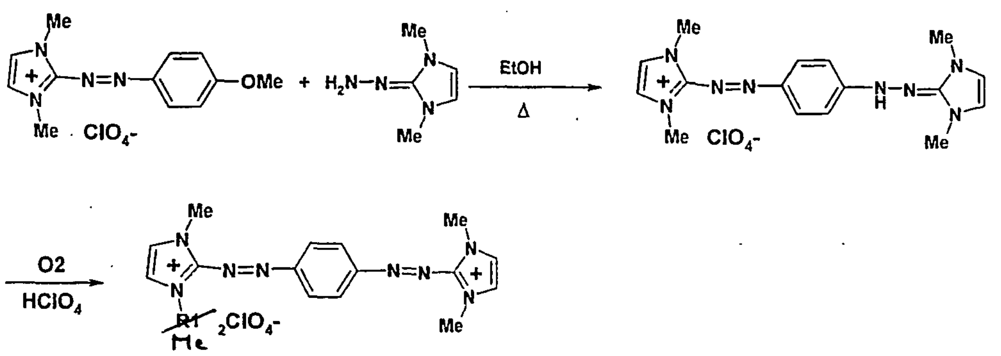


A une solution éthanolique de chlorate de 1,3-diméthyl-2-[4-méthoxyphénylazo]-imidazol-1-ium (1 mmole) (obtenue selon le protocole décrit ci-dessus) est ajoutée sous agitation une solution éthanolique de chlorhydrate de 1,3-diméthyl-(1,3-dihydroimidazol-2-ylidène)-hydrazone (1,2 mole) préalablement neutralisée par un équivalent de soude éthanolique à température ambiante. Le milieu réactionnel est progressivement porté au reflux, puis refroidi à 25°C après disparition des réactifs. Le milieu réactionnel est agité sous air pendant une nuit après avoir rajouter un équivalent d'acide perchlorique, puis refroidi à 0°C et le précipité est essoré, lavé par de l'acétate d'éthyle et séché jusqu'à poids constant. On obtient ainsi 0,1 mmole de dichlorate de 1,3-diméthyl-2-[4-(1,3-diméthyl-(imidazol-1-ium)-2-ylazo)-phénylazo]-imidazol-1-ium dont le $\lambda_{max}$ est de 585 nm dans une solution méthanolique.

Le colorant obtenu a teint les cheveux dans une nuance violette.

## Revendications

1. Composition pour la teinture des fibres kératiniques et en particulier des fibres kératiniques humaines telles que les cheveux, comprenant au moins un colorant diazoïque dicationique de formule (I) suivante :

$$W_1-N=N-W_2-N=N-W_3$$

(I)

dans laquelle

- $W_1$ et $W_3$, indépendamment l'un de l'autre représentent, un radical hétéroaromatique représentés par les formules (II) et (III) suivantes :

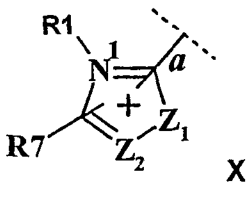

(II)

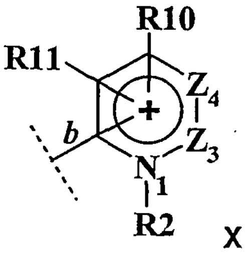

(III)

- $W_2$ représente un groupement aromatique carboné, pyridinique ou pyridazinyle de formule (IV)

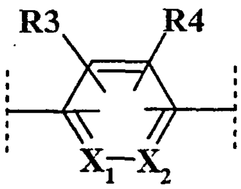

(IV)

formules (II), (III), (IV), dans lesquelles :

- $X_1$ représente un atome d'azote ou un radical $CR_5$
- $X_2$ représente un atome d'azote ou un radical $CR_6$
- $Z_1$ représente un atome d'oxygène, de soufre ou un radical $NR_8$,
- $Z_2$ représente un atome d'azote ou un radical $CR_9$,
- $Z_3$ représente un atome d'azote ou un radical $CR_{12}$,
- $Z_4$ représente un atome d'azote ou un radical $CR_{13}$,
- la liaison *a* du cycle cationique à 5 chaînons de la formule (II) est reliée au groupement azoïque de la formule (I),
- la liaison *b* du cycle cationique à 6 chaînons de la formule (III) est reliée au groupement azoïque de la formule (I)
- $R_3$, $R_4$, $R_5$, $R_6$, $R_7$, $R_9$, $R_{10}$, $R_{11}$, $R_{12}$, $R_{13}$ , représentent, ensemble ou indépendamment l'un de l'autre , un atome d'hydrogène, une chaîne hydrocarbonée en $C_1$-$C_{16}$ linéaire ou ramifiée, pouvant former un ou plusieurs cycles carbonés comportant de 3 à 6 chaînons, et pouvant être saturée ou insaturée, dont un ou plusieurs atomes de carbone de la chaîne carbonée peuvent être remplacés par un atome d'oxygène, d'azote ou de soufre ou par un groupement $SO_2$, et dont les atomes de carbone peuvent être, indépendamment les uns des autres, substitués par un ou plusieurs atomes d'halogènes ; $R_3$, $R_4$, $R_5$, $R_6$, $R_7$, $R_9$, $R_{10}$, $R_{11}$, $R_{12}$, $R_{13}$, ne comportant pas de liaison peroxyde, ni de radicaux diazo ou nitroso,
- $R_7$ avec $R_9$, $R_{10}$ avec $R_{11}$ et $R_{12}$ avec $R_{13}$ forme un cycle aromatique carboné,
- $R_1$, $R_2$ et $R_8$ représentent un radical alkyle en $C_1$-$C_8$ linéaire ou ramifié, éventuellement substitué par un ou plusieurs radicaux choisis parmi les radicaux hydroxy, alcoxy en $C_1$-$C_2$, (poly)-hydroxyalcoxy en $C_2$-$C_4$, amino,

(di)alkylamino en $C_{1-}C_2$ , carboxy ou sulfonique ; un radical phényle éventuellement substitué,

X est un anion organique ou minéral.

2. Composition selon la revendication 1 dans laquelle $R_3$, $R_4$, $R_5$, $R_6$, $R_{10}$, $R_{11}$, $R_{12}$, $R_{13}$, représentent, indépendamment l'un de l'autre, un atome d'hydrogène ; un radical alkyle en $C_1$-$C_4$ linéaire ou ramifié, éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_1$-$C_2$, carboxy ou sulfonique; un radical phényle éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_{1-}C_2$, carboxy, sulfonique ou un atome d'halogène; un radical carboxy ; un radical sulfonylamino ; un radical sulfonique ; un radical alcoxy en C1-C2 ; un radical (poly)-hydroxyalcoxy en $C_2$-$C_4$; un radical amino ; un radical (di)alkylamino en $C_1$-$C_2$; un radical (poly)-hydroxyalkylamino en $C_2$-$C_4$.

3. Composition selon la revendication 2, dans laquelle $R_3$, $R_4$, $R_5$, $R_6$, $R_{10}$, $R_{11}$, $R_{12}$, $R_{13}$ représentent un atome d'hydrogène, un radical alkyle en $C_1$-$C_4$ éventuellement substitué par un ou plusieurs radicaux choisis parmi les radicaux hydroxy, amino, (di)alkylamino en $C_1$-$C_2$ ; un radical carboxy ; un radical alcoxy en $C_{1-}C_2$ ; un radical amino ; un radical (di)alkylamino en $C_1$-$C_2$ ; un radical (poly)-hydroxyalkylamino en $C_2$-$C_4$.

4. Composition selon la revendication 3 dans laquelle $R_3$, $R_4$, $R_5$, $R_6$, $R_{10}$, $R_{11}$, $R_{12}$, $R_{13}$, représentent un atome d'hydrogène, un radical méthyle, phényle, 2-hydroxyméthyle, un carboxy, un radical méthoxy, éthoxy, 2-hydroxyéthyloxy, un radical amino, méthylamino, diméthylamino, 2-hydroxyéthylamino.

5. Composition selon l'une quelconque des revendications 1 à 4 dans laquelle $R_7$ et $R_9$ représentent, indépendamment l'un de l'autre, un atome d'hydrogène ; un radical alkyle en $C_1$-$C_4$ linéaire ou ramifié, éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_1$-$C_2$, carboxy ou sulfonique ; un radical phényle éventuellement substitué ; un radical carboxy ; un radical sulfonylamino.

6. Composition selon la revendication 5 dans laquelle $R_7$ et $R_9$ représentent un atome d'hydrogène, un radical phényle, un radical alkyle en $C_1$-$C_4$ éventuellement substitué par un ou plusieurs radicaux choisis parmi les radicaux hydroxy, amino, (di)alkylamino en $C_1$-$C_2$, carboxy.

7. Composition selon la revendication 6 dans laquelle $R_7$ et $R_9$ représentent un atome d'hydrogène, un radical méthyle, phényle, 2-hydroxyméthyle, un carboxy.

8. Composition selon l'une quelconque des revendications 1 à 7 dans laquelle $R_1$, $R_2$ et $R_8$ représentent un radical alkyle en $C_1$-$C_8$ linéaire ou ramifié, éventuellement substitué par un ou plusieurs radicaux choisis parmi les radicaux hydroxy, alcoxy en $C_1$-$C_2$, (poly)-hydroxyalcoxy en $C_2$-$C_4$, amino, (di)alkylamino en $C_{1-}C_2$, carboxy ou sulfonique ; un radical phényle éventuellement substitué.

9. Composition selon l'une quelconque des revendications 1 à 8 dans laquelle $R_1$, $R_2$ et $R_8$ représentent un radical alkyle en $C_1$-$C_4$ éventuellement substitué par un ou plusieurs radicaux choisis parmi les radicaux hydroxy, alcoxy en $C_1$-$C_2$, amino, (di)alkylamino en $C_1$-$C_2$, carboxy, sulfonique.

10. Composition selon la revendication 9 dans laquelle $R_1$, $R_2$ et $R_8$ représentent un radical méthyle, éthyle, 2-hydroxyéthyle, 1-carboxyméthyle, 2-carboxyéthyle, 2-sulfonyléthyle.

11. Composition selon l'une quelconque des revendications 1 à 10 dans laquelle $W_1$ et $W_3$ représentent, indépendamment l'un de l'autre, un groupe cationique imidazolium, triazolium, thiazolium, pyridinium substitué par les radicaux $R_1$, $R_7$ $R_{10}$, $R_{11}$, $R_{12}$, $R_{13}$.

12. Composition selon l'une quelconque des revendications 1 à 11 dans laquelle $W_2$ représente un groupe phényle ou pyridyle substitué par les radicaux préférés $R_3$, $R_4$ $R_5$, $R_6$.

13. Composition selon l'une quelconque des revendications précédentes, **caractérisée par le fait que** les colorants dicationiques diazoïques de formule (I) sont choisis dans le groupe formé par les composés suivants :

1,3-diméthyl-2-[4-(1,3-diméthyl-(imidazol-1-ium)-2-ylazo)-phénylazo]-imidazol-1-ium.

1,4-diméthyl -3-[4-(1,4-diméthyl -(triazol-2-ium)-3-ylazo)-phénylazo]-triazol-2-ium.
1-méthyl-2-[4-(1-méthyl-(pyridin-1-ium)-2-ylazo)-phénylazo]- pyridin -1-ium.
1-méthyl-3-[4-(1-méthyl-(pyridin-1-ium)-3-ylazo)-phénylazo]- pyridin -1-ium.
1,3-diméthyl-2-[4-(3-méthyl-(thiazol-3-ium)-2-ylazo)-phénylazo]-imidazol-1-ium.
1,4-diméthyl-3-[4-(3-méthyl -(thiazol-3-ium)-2-ylazo)-phénylazo]-triazol-2-ium.
1,3-diméthyl-2-[4-(1,4-diméthyl -(triazol-2-ium)-3-ylazo)-phénylazo]-1-iumidazol-1-ium.
1-méthyl-2-[4-(3-méthyl-(thiazol-3-ium)-2-ylazo)-phénylazo]- pyridin -1-ium.
1-méthyl-3-[4-(3-méthyl-(thiazol-3-ium)-2-ylazo)-phénylazo]- pyridin -1-ium.
1,3-diméthyl-2-[4-(1-méthyl-(pyridin-1-ium)-2-ylazo)-phénylazo]-imidazol-1-ium.
1,4-diméthyl -3-[4-(1-méthyl -(pyridin-1-ium)-2-ylazo)-phénylazo]-triazol-2-ium.
1,3-diméthyl-2-[4-(1-(2-hydroxyéthyl)-(pyridin-1-ium)-2-ylazo)-phénylazo]-imidazol-1-ium.
1,4-diméthyl -3-[4-(1-(2-hydroxyéthyl)-(pyridin-1-ium)-2-ylazo)-phénylazo]-triazol-2-ium.
1,3-diméthyl-2-[4-(1-méthyl-(pyridin-1-ium)-3=ylazo)-phénylazo]-imidazol-1-ium.
1,4-diméthyl -3-[4-(1-méthyl -(pyridin-1-ium)-3-ylazo)-phénylazo]-triazol-2-ium.
1,3-diméthyl-2-[4-(1-(2-hydroxyéthyl)-(pyridin-1-ium)-3-ylazo)-phénylazo]-imidazol-1-ium.
1,4-diméthyl -3-[4-(1-(2-hydroxyéthyl)-(pyridin-1-ium)-3-ylazo)-phénylazo]-triazol-2-ium.
1,3-diméthyl-2-[4-(1,3-diméthyl-(imidazol-1-ium)-2-ylazo)-3-méthoxyphénylazo]-imidazol-1-ium.
1,3-diméthyl-2-[4-(1,4-diméthyl-(triazol-2-ium)-3-ylazo)-3-méthoxyphénylazo]-imidazol-1-ium.
1,3-diméthyl-2-[4-(1-méthyl-(pyridin-1-ium)-2-ylazo)-3-méthoxyphénylazo]-imidazol-1-ium.

**14.** Composition selon l'une quelconque des revendications précédentes, dans laquelle le ou les colorants diazoïques dicationiques de formule (I) sont présents à une concentration allant de 0,001 à 5% et de préférence de 0,05 à 2% en poids par rapport au poids total de la composition.

**15.** Composition selon l'une quelconque des revendications précédentes comprenant de plus une base d'oxydation.

**16.** Composition selon la revendication 15 dans laquelle la base d'oxydation est choisie parmi les paraphénylènediamines, les bis-phénylalkylènediamines, les para-aminophénols, les ortho-aminophénols, les bases hétérocycliques, et leurs sels d'addition avec un acide.

**17.** Composition selon l'une quelconque des revendications 15 ou 16 dans laquelle la ou les bases d'oxydation sont présentes en une quantité allant de 0,001 à 10 %, de préférence de 0,005 à 6 %.

**18.** Composition selon l'une quelconque des revendications précédentes comprenant au moins un coupleur.

**19.** Composition selon la revendication 18 dans laquelle le coupleur est choisi parmi les métaphénylènediamines, les métaaminophénols, les métadiphénols, les coupleurs naphtaléniques et les coupleurs hétérocycliques et leurs sels d'addition avec un acide.

**20.** Composition selon l'une quelconque des revendications précédentes comprenant en outre au moins un colorant direct différent de ceux de formule (I), choisi parmi les colorants directs nitrés benzéniques neutres, acides ou cationiques, les colorants directs azoïques neutres acides ou cationiques, les colorants directs quinoniques et en particulier anthraquinoniques neutres, acides ou cationiques, les colorants directs aziniques, les colorants directs méthiniques, les colorants directs triarylméthaniques, les colorants directs indoaminiques et les colorants directs naturels.

**21.** Composition selon l'une quelconque des revendications précédentes comprenant en outre un agent oxydant, de préférence le peroxyde d'hydrogène.

**22.** Procédé de teinture des fibres kératiniques et en particulier des fibres kératiniques humaines telles que les cheveux, **caractérisé en ce qu'**on applique sur les fibres au moins une composition tinctoriale telle que définie à l'une quelconque des revendications 1 à 14.

**23.** Procédé selon la revendication 22 dans lequel la composition tinctoriale contient un agent oxydant.

**24.** Procédé selon la revendication 23 dans lequel l'agent oxydant est mélangé au moment de l'emploi à la composition tinctoriale.

**25.** Procédé selon la revendication 23 dans lequel l'agent oxydant est appliqué sur les fibres sous forme de composition oxydante simultanément ou séquentiellement à la composition tinctoriale.

**26.** Procédé de teinture d'oxydation des fibres kératiniques, en particulier des fibres kératiniques humaines et plus particulièrement des cheveux, **caractérisé en ce qu'**on applique sur les fibres au moins une composition tinctoriale telle que définie selon l'une quelconque des revendications 1 à 14, comprenant de plus au moins une base d'oxydation et optionnellement, au moins un coupleur, en présence d'un agent oxydant.

**27.** Procédé selon la revendication 26 dans lequel l'agent oxydant est mélangé au moment de l'emploi à la composition tinctoriale.

**28.** Procédé selon la revendication 26 dans lequel l'agent oxydant est appliqué sur les fibres sous forme de composition oxydante simultanément ou séquentiellement à la composition tinctoriale.

**29.** Dispositif à plusieurs compartiments ou "kit" de teinture à plusieurs compartiments, dans lequel un premier compartiment contient une composition telle que définie à l'une quelconque des revendications 1 à 20 et un deuxième compartiment contient une composition oxydante.

**30.** Composés diazoïques dicationiques de formule (I) telle que définie selon l'une quelconque des revendications 1 à 13.

**Claims**

**1.** Composition for dyeing keratin fibres and in particular human keratin fibres such as the hair, comprising at least one dicationic diazo dye of formula (I) below:

$$W_1-N=N-W_2-N=N-W_3$$

(I)

in which

• $W_1$ and $W_3$, independently of each other, represent a heteroaromatic radical represented by the formulae (II) and (III) below:

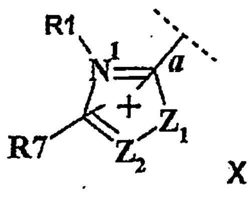

(II)

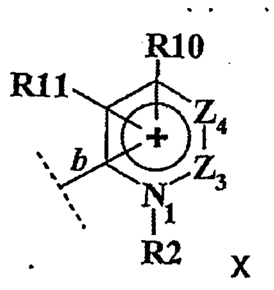

(III)

• $W_2$ represents a carbon-based, pyridine-based or pyridazine-based aromatic group of formula (IV)

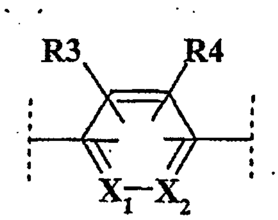

(IV)

in which formulae (II), (III), (IV):

- $X_1$ represents a nitrogen atom or a radical $CR_5$,
- $X_2$ represents a nitrogen atom or a radical $CR_6$,
- $Z_1$ represents an oxygen or sulfur atom or a radical $NR_8$,
- $Z_2$ represents a nitrogen atom or a radical $CR_9$,
- $Z_3$ represents a nitrogen atom or a radical $CR_{12}$,
- $Z_4$ represents a nitrogen atom or a radical $CR_{13}$,
- the bond a of the 5-membered cationic ring of formula (II) is linked to the azo group of formula (I),
- the bond b of the 6-membered cationic ring of formula (III) is linked to the azo group of formula (I) ,
- $R_3$, $R_4$, $R_5$, $R_6$, $R_7$, $R_9$, $R_{10}$, $R_{11}$, $R_{12}$, $R_{13}$, represent, together or independently of each other, a hydrogen atom, a linear or branched $C_1$-$C_{16}$ hydrocarbon-based chain, that can form one or more 3- to 6-membered carbon-based rings, and that can be saturated or unsaturated, one or more carbon atoms of the carbon-based chain of which may be replaced with an oxygen, nitrogen or sulfur atom or with an $SO_2$ group, and the carbon atoms of which may be substituted, independently of each other, with one or more halogen atoms; $R_3$, $R_4$, $R_5$, $R_6$, $R_7$, $R_9$, $R_{10}$, $R_{11}$, $R_{12}$, $R_{13}$, not comprising a peroxide bond or diazo or nitroso radicals,
- $R_7$ with $R_9$, $R_{10}$ with $R_{11}$ and $R_{12}$ with $R_{13}$ forms a carbon-based aromatic ring,
- $R_1$, $R_2$ and $R_8$ represent a linear or branched $C_1$-$C_8$ alkyl radical optionally substituted with one or more radicals chosen from hydroxyl, $C_1$-$C_2$ alkoxy, $C_2$-$C_4$ (poly)hydroxyalkoxy, amino, $C_1$-$C_2$ (di)alkylamino, carboxyl and sulfonic radicals; or an optionally substituted phenyl radical, X is an organic or mineral anion.

**2.** Composition according to Claim 1, in which $R_3$, $R_4$, $R_5$, $R_6$, $R_{10}$, $R_{11}$, $R_{12}$, $R_{13}$, represent, independently of each other, a hydrogen atom; a linear or branched $C_1$-$C_4$ alkyl radical, optionally substituted with one or more radicals chosen from hydroxyl, $C_1$-$C_2$ alkoxy, $C_2$-$C_4$(poly)hydroxyalkoxy, amino, $C_1$-$C_2$ (di)alkylamino, carboxyl and sulfonic radicals; a phenyl radical optionally substituted with one or more radicals chosen from hydroxyl, $C_1$-$C_2$ alkoxy, $C_2$-$C_4$ (poly)hydroxyalkoxy, amino, $C_1$-$C_2$ (di)alkylamino, carboxyl and sulfonic radicals or a halogen atom; a carboxyl radical; a sulfonylamino radical; a sulfonic radical, a $C_1$-$C_2$ alkoxy radical; a $C_2$-$C_4$ (poly)hydroxyalkoxy radical; an amino radical; a $C_1$-$C_2$ (di)alkylamino radical; a $C_2$-$C_4$ (poly)hydroxyalkylamino radical.

**3.** Composition according to Claim 2, in which $R_3$, $R_4$, $R_5$, $R_6$, $R_{10}$, $R_{11}$, $R_{12}$, $R_{13}$ represent a hydrogen atom, a $C_1$-$C_4$ alkyl radical optionally substituted with one or more radicals chosen from hydroxyl, amino and $C_1$-$C_2$ (di)alkylamino radicals; a carboxyl radical; a $C_1$-$C_2$ alkoxy radical; an amino radical; a $C_1$-$C_2$ (di) alkylamino radical; a $C_2$-$C_4$ (poly) hydroxyalkylamino radical.

**4.** Composition according to Claim 3, in which $R_3$, $R_4$, $R_5$, $R_6$, $R_{10}$, $R_{11}$, $R_{12}$, $R_{13}$, represent a hydrogen atom, a methyl, phenyl or 2-hydroxymethyl radical, a carboxyl, a methoxy, ethoxy or 2-hydroxyethyloxy radical, or an amino, methylamino, dimethylamino or 2-hydroxyethylamino radical.

**5.** Composition according to any one of Claims 1 to 4, in which $R_7$ and $R_9$ represent, independently of each other, a hydrogen atom; a linear or branched $C_1$-$C_4$ alkyl radical optionally substituted with one or more radicals chosen from hydroxyl, $C_1$-$C_2$ alkoxy, $C_2$-$C_4$ (poly)hydroxyalkoxy, amino, $C_1$-$C_2$ (di)alkylamino, carboxyl and sulfonic radicals; an optionally substituted phenyl radical; a carboxyl radical; a sulfonylamino radical.

**6.** Composition according to Claim 5, in which $R_7$ and $R_9$ represent a hydrogen atom, a phenyl radical or a $C_1$-$C_4$ alkyl radical optionally substituted with one or more radicals chosen from hydroxyl, amino, $C_1$-$C_2$ (di)alkylamino and carboxyl radicals.

7. Composition according to Claim 6, in which $R_7$ and $R_9$ represent a hydrogen atom, a methyl, phenyl or 2-hydroxymethyl radical or a carboxyl.

8. Composition according to any one of Claims 1 to 7, in which $R_1$, $R_2$ and $R_8$ represent a linear or branched $C_1$-$C_8$ alkyl radical, optionally substituted with one or more radicals chosen from hydroxyl, $C_1$-$C_2$ alkoxy, $C_2$-$C_4$ (poly) hydroxyalkoxy, amino, $C_1$-$C_2$ (di)alkylamino, carboxyl and sulfonic radicals; an optionally substituted phenyl radical.

9. Composition according to any one of Claims 1 to 8, in which $R_1$, $R_2$ and $R_8$ represent a $C_1$-$C_4$ alkyl radical optionally substituted with one or more radicals chosen from hydroxyl, $C_1$-$C_2$ alkoxy, amino, $C_1$-$C_2$ (di) alkylamino, carboxyl and sulfonic radicals.

10. Composition according to Claim 9, in which $R_1$, $R_2$ and $R_8$ represent a methyl, ethyl, 2-hydroxyethyl, 1-carboxymethyl, 2-carboxyethyl or 2-sulfonylethyl radical.

11. Composition according to any one of Claims 1 to 10, in which $W_1$ and $W_3$, independently of each other represent an imidazolium, triazolium, thiazolium or pyridinium cationic group substituted by the radicals $R_1$, $R_7$, $R_{10}$, $R_{11}$, $R_{12}$, $R_{13}$.

12. Composition according to any one of Claims 1 to 11, in which $W_2$ represents a phenyl or pyridyl group substituted by the preferred radicals $R_3$, $R_4$, $R_5$, $R_6$.

13. Composition according to any one of the preceding claims, **characterized in that** the diazo dicationic dyes of formula (I) are chosen from the group formed by the following compounds:

1,3-dimethyl-2-[4-(1,3-dimethyl(imidazol-1-ium)-2-ylazo)phenylazo]imidazol-1-ium,
1,4-dimethyl-3-[4-(1,4-dimethyl(triazol-2-ium)-3-ylazo)phenylazo]triazol-2-ium,
1-methyl-2-[4-(1-methyl(pyridin-1-ium)-2-ylazo)-phenylazo]pyridin-1-ium,
1-methyl-3-[4-(1-methyl(pyridin-1-ium)-3-ylazo)-phenylazo]pyridin-1-ium,
1,3-dimethyl-2-[4-(3-methyl(thiazol-3-ium)-2-yl-azo)phenylazo]imidazol-1-ium,
1,4-dimethyl-3-[4-(3-methyl(thiazol-3-ium)-2-yl-azo)phenylazo]triazol-2-ium,
1,3-dimethyl-2-[4-(1,4-dimethyl(triazol-2-ium)-3-ylazo)phenylazo]imidazol-1-ium,
1-methyl-2-[4-(3-methyl(thiazol-3-ium)-2-yl-azo)phenylazo]pyridin-1-ium,
1-methyl-3-[4-(3-methyl(thiazol-3-ium)-2-yl-azo)phenylazo]pyridin-1-ium,
1,3-dimethyl-2-[4-(1-methyl(pyridin-1-ium)-2-yl-azo)phenylazo]imidazol-1-ium,
1,4-dimethyl-3-[4-(1-methyl(pyridin-1-ium)-2-yl-azo)phenylazo]triazol-2-ium,
1,3-dimethyl-2-[4-(1-(2-hydroxyethyl)(pyridin-1-ium)-2-ylazo)phenylazo]imidazol-1-ium,
1,4-dimethyl-3-[4-(1-(2-hydroxyethyl)(pyridin-1-ium)-2-ylazo)phenylazo]triazol-2-ium,
1,3-dimethyl-2-[4-(1-methyl(pyridin-1-ium)-3-yl-azo)phenylazo]imidazol-1-ium,
1,4-dimethyl-3-[4-(1-methyl(pyridin-1-ium)-3-yl-azo)phenylazo]triazol-2-ium,
1,3-dimethyl-2-[4-(1-(2-hydroxyethyl)(pyridin-1-ium)-3-ylazo)phenylazo]imidazol-1-ium,
1,4-dimethyl-3-[4-(1-(2-hydroxyethyl)(pyridin-1-ium)-3-ylazo)phenylazo]triazol-2-ium,
1,3-dimethyl-2-[4-(1,3-dimethyl(imidazol-1-ium)-2-ylazo)-3-methoxyphenylazo]imidazol-1-ium,
1,3-dimethyl-2-[4-(1,4-dimethyl(triazol-2-ium)-3-ylazo)-3-methoxyphenylazo]imidazol-1-ium,
1,3-dimethyl-2-[4-(1-methyl(pyridin-1-ium)-2-ylazo)-3-methoxyphenylazo]imidazol-1-ium.

14. Composition according to any one of the preceding claims, in which the dicationic diazo dye(s) of formula (I) is(are) present in a concentration ranging from 0.001% to 5% and preferably from 0.05% to 2% by weight relative to the total weight of the composition.

15. Composition according to any one of the preceding claims, also comprising an oxidation base.

16. Composition according to Claim 15, in which the oxidation base is chosen from para-phenylenediamines, bis (phenyl) alkylenediamines, para-aminophenols, ortho-aminophenols and heterocyclic bases, and the addition salts thereof with an acid.

17. Composition according to either of Claims 15 and 16, in which the oxidation base(s) is(are) present in an amount ranging from 0.001% to 10% and preferably from 0.005% to 6%.

**18.** Composition according to any one of the preceding claims, comprising at least one coupler.

**19.** Composition according to Claim 18, in which the coupler is chosen from meta-phenylenediamines, meta-aminophenols, meta-diphenols, naphthalene-based couplers and heterocyclic couplers, and the addition salts thereof with an acid.

**20.** Composition according to any one of the preceding claims, also comprising at least one direct dye other than those of formula (I), chosen from neutral, acidic or cationic nitrobenzene direct dyes, neutral, acidic or cationic azo direct dyes, neutral, acidic or cationic quinone and in particular anthraquinone direct dyes, azine direct dyes, methine direct dyes, triarylmethane direct dyes, indoamine direct dyes and natural direct dyes.

**21.** Composition according to any one of the preceding claims, also comprising an oxidizing agent, preferably hydrogen peroxide.

**22.** Process for dyeing keratin fibres, and in particular human keratin fibres such as the hair, **characterized in that** at least one dye composition as defined in any one of Claims 1 to 14 is applied to the fibres.

**23.** Process according to Claim 22, in which the dye composition contains an oxidizing agent.

**24.** Process according to Claim 23, in which the oxidizing agent is mixed with the dye composition at the time of use.

**25.** Process according to Claim 23, in which the oxidizing agent is applied to the fibres in the form of an oxidizing composition simultaneously with or sequentially to the dye composition.

**26.** Process for the oxidation dyeing of keratin fibres, in particular human keratin fibres and more particularly the hair, **characterized in that** at least one dye composition as defined according to any one of Claims 1 to 14, also comprising at least one oxidation base and optionally at least one coupler, is applied to the fibres, in the presence of an oxidizing agent.

**27.** Process according to Claim 26, in which the oxidizing agent is mixed with the dye composition at the time of use.

**28.** Process according to Claim 26, in which the oxidizing agent is applied to the fibres in the form of an oxidizing composition simultaneously with or sequentially to the dye composition.

**29.** Multi-compartment device or multi-compartment dyeing kit, in which a first compartment contains a composition as defined in any one of Claims 1 to 20 and a second compartment contains an oxidizing composition.

**30.** Dicationic diazo compounds of formula (I) as defined according to any one of Claims 1 to 13.

## Patentansprüche

**1.** Zusammensetzung zum Färben von Keratinfasern und insbesondere menschlichen Keratinfasern, wie Haaren, die mindestens einen dikationischen Diazofarbstoff der folgenden Formel (I) enthält:

$$W_1—N=N—W_2—N=N—W_3$$

(I)

worin bedeuten

- $W_1$ und $W_3$ unabhängig voneinander eine heteroaromatische Gruppe, die durch die folgenden Formeln (II) und (III) dargestellt werden kann:

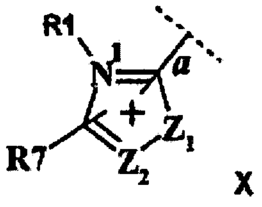 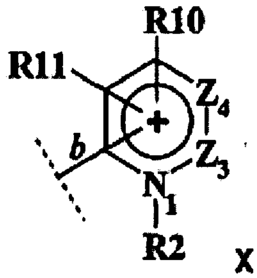

(II) (III)

- $W_2$ eine aromatische Gruppe auf Kohlenstoffbasis, eine Pyridingruppe oder Pyridazinylgruppe der Formel (IV)

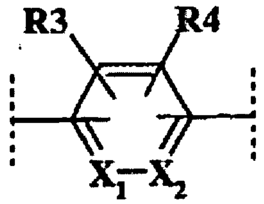

(IV)

wobei in den Formel (II), (III) und (IV) bedeuten:

- $X_1$ bedeutet ein Stickstoffatom oder eine Gruppe $CR_5$,
- $X_2$ bedeutet ein Stickstoffatom oder eine Gruppe $CR_6$.
- $Z_1$ bedeutet ein Sauerstoffatom, Schwefelatom oder eine Gruppe $NR_8$,
- $Z_2$ bedeutet ein Stickstoffatom oder eine Gruppe $CR_9$,
- $Z_3$ bedeutet ein Stickstoffatom oder eine Gruppe $CR_{12}$,
- $Z_4$ bedeutet ein Stickstoffatom oder eine Gruppe $CR_{13}$,
- die Bindung **a** des 5-gliedrigen kationischen Rings der Formel (II) ist an eine Azogruppe der Formel (I) gebunden,
- die Bindung **b** des 6-gliedrigen kationischen Rings der Formel (III) ist an eine Azogruppe der Formel (I) gebunden
- die Gruppen $R_3$, $R_4$, $R_5$, $R_6$, $R_7$, $R_9$, $R_{10}$, $R_{11}$, $R_{12}$ und $R_{13}$ bedeuten gleichzeitig oder unabhängig voneinander ein Wasserstoffatom, eine geradkettige oder verzweigte $C_{1-16}$-Kohlenwasserstoffkette, die einen oder mehrere 3- bis 6-gliedrige Kohlenstoffringe bilden und gesättigt oder ungesättigt vorliegen kann, wobei ein oder mehrere Kohlenstoffatome der Kohlenstoffkette durch ein Sauerstoffatom, Stickstoffatom oder Schwefelatom oder durch eine Gruppe $SO_2$ ersetzt sein können und wobei die Kohlenstoffatome unabhängig voneinander mit einem oder mehreren Halogenatomen substituiert sein können; wobei $R_3$, $R_4$, $R_5$, $R_6$, $R_7$, $R_9$, $R_{10}$, $R_{11}$, $R_{12}$ und $R_{13}$ weder eine Peroxidbindung noch eine Diazogruppe oder Nitrosogruppe enthalten,
- $R_7$ bildet mit $R_9$, Rio mit $R_{11}$ und $R_{12}$ mit $R_{13}$ einen aromatischen Ring auf Kohlenstoffbasis,
- $R_1$, $R_2$ und $R_8$ bedeuten eine geradkettige oder verzweigte $C_{1-8}$-Alkylgruppe, die gegebenenfalls mit einer oder mehreren Gruppen substituiert ist, die unter den Gruppen Hydroxy, $C_{1-2}$-Alkoxy, $C_{2-4}$-(Poly)hydroxyalkoxy, Amino, $C_{1-2}$-(Di)alkylamino, Carboxy oder Sulfonsäure ausgewählt sind; eine gegebenenfalls substituierte Phenylgruppe,

X ist ein organisches oder anorganisches Kation.

**2.** Zusammensetzung nach Anspruch 1, worin die Gruppen $R_3$, $R_4$, $R_5$, $R_6$, $R_{10}$, $R_{11}$, $R_{12}$ und $R_{13}$ unabhängig voneinander bedeuten: ein Wasserstoffatom; eine geradkettige oder verzweigte $C_{1-4}$-Alkylgruppe, die gegebenenfalls mit einer oder mehreren Gruppen substituiert sein kann, die unter den Gruppen Hydroxy, $C_{1-2}$-Alkoxy, $C_{2-4}$-(Poly) hydroxyalkoxy, Amino, $C_{1-2}$-(Di)alkylamino, Carboxy oder Sulfonsäure ausgewählt sind; eine Phenylgruppe, die gegebenenfalls mit einer oder mehreren Gruppen substituiert ist, die unter den Gruppen Hydroxy, $C_{1-2}$-Alkoxy,

$C_{2-4}$-(Poly)hydroxyalkoxy, Amino, $C_{1-2}$-(Di)alkylamino, Carboxy, Sulfonsäure oder einem Halogenatom ausgewählt sind; Carboxy, Sulfonylamino; eine Sulfonsäuregruppe; $C_{1-2}$-Alkoxy; $C_{2-4}$-Polyhydroxyalkoxy; Amino; $C_{1-2}$-(Di)alkylamino; $C_{2-4}$-(Poly)-hydroxyalkylamino.

**3.** Zusammensetzung nach Anspruch 2, worin die Gruppen $R_3$, $R_4$, $R_5$, $R_6$, Rio, $R_{11}$, $R_{12}$ und $R_{13}$ ein Wasserstoffatom, eine $C_{1-4}$-Alkylgruppe, die gegebenenfalls mit einer oder mehreren Gruppen substituiert ist, die unter den Gruppen Hydroxy, Amino, $C_{1-2}$-(Di)alkylamino ausgewählt sind; Carboxy; $C_{1-2}$-Alkoxy; Amino; $C_{1-2}$-(Di)alkylamino; $C_{2-4}$-(Poly) hydroxyalkylamino bedeuten.

**4.** Zusammensetzung nach Anspruch 3, worin die Gruppen $R_3$, $R_4$, $R_5$, $R_6$, $R_{10}$, $R_{11}$, $R_{12}$ und $R_{13}$ ein Wasserstoffatom, Methyl, Phenyl, 2-Hydroxymethyl, Carboxy, Methoxy, Ethoxy, 2-Hydroxyethyloxy; Amino, Methylamino, Dimethylamino, 2-Hydroxyethylamino bedeuten.

**5.** Zusammensetzung nach einem der Ansprüche 1 bis 4, worin die Gruppen $R_7$ und $R_9$ unabhängig voneinander ein Wasserstoffatom; eine geradkettige oder verzweigte $C_{1-4}$-Alkylgruppe, die gegebenenfalls mit einer oder mehreren Gruppen substituiert ist, die unter den Gruppen Hydroxy, $C_{1-2}$-Alkoxy, $C_{2-4}$-(Poly)hydroxyalkoxy, Amino, $C_{1-2}$-(Di) alkylamino, Carboxy oder Sulfonsäure ausgewählt sind; eine gegebenenfalls substituierte Phenylgruppe; Carboxy; Sulfonylamino bedeuten.

**6.** Zusammensetzung nach Anspruch 5, worin die Gruppen $R_7$ und $R_9$ ein Wasserstoffatom, Phenyl, eine $C_{1-4}$-Alkylgruppe, die gegebenenfalls mit einer oder mehreren Gruppen substituiert ist, die unter den Gruppen Hydroxy, Amino, $C_{1-2}$-(Di)alkylamino, Carboxy ausgewählt sind, bedeuten.

**7.** Zusammensetzung nach Anspruch 6, worin die Gruppen $R_7$ und $R_9$ ein Wasserstoffatom, Methyl, Phenyl, 2-Hydroxymethyl, Carboxy bedeuten.

**8.** Zusammensetzung nach einem der Ansprüche 1 bis 7, worin die Gruppen $R_1$, $R_2$ und $R_8$ eine geradkettige oder verzweigte $C_{1-4}$-Alkylgruppe, die gegebenenfalls mit einer oder mehreren Gruppen substituiert ist, die unter den Gruppen Hydroxy, $C_{1-2}$-Alkoxy, $C_{2-4}$-(Poly)hydroxyalkoxy, Amino, $C_{1-2}$-(Di)alkylamino, Carboxy oder Sulfonsäure ausgewählt sind; eine gegebenenfalls substituierte Phenylgruppe bedeuten.

**9.** Zusammensetzung nach einem der Ansprüche 1 bis 8, worin die Gruppen $R_1$, $R_2$ und $R_8$ eine $C_{1-4}$-Alkylgruppe bedeuten, die gegebenenfalls mit einer oder mehreren Gruppen substituiert ist, die unter den Gruppen Hydroxy, $C_{1-2}$-Alkoxy, Amino, $C_{1-2}$-(Di)alkylamino, Carboxy oder Sulfonsäure ausgewählt sind.

**10.** Zusammensetzung nach Anspruch 9, worin die Gruppen $R_1$, $R_2$ und $R_8$ Methyl, Ethyl, 2-Hydroxyethyl, 1-Carboxymethyl, 2-Carboxyethyl, 2-Sulfonylethyl bedeuten.

**11.** Zusammensetzung nach einem der Ansprüche 1 bis 10, worin $W_1$ und $W_3$ unabhängig voneinander eine kationische Gruppe Imidazolium, Triazolium, Thiazolium, Pyridinium bedeuten, die mit den Gruppen $R_1$, $R_7$, $R_{10}$, $R_{11}$, $R_{12}$, $R_{13}$ substituiert ist.

**12.** Zusammensetzung nach einem der Ansprüche 1 bis 11, wobei $W_2$ eine Gruppe Phenyl oder Pyridyl bedeutet, die mit den bevorzugten Gruppen $R_3$, $R_4$, $R_5$, $R_6$ substituiert ist.

**13.** Zusammensetzung nach einem der vorhergehenden Ansprüche, **dadurch gekennzeichnet, dass** die dikationischen Diazofarbstoffe der Formel (I) unter den folgenden Verbindungen ausgewählt sind:

1,3-Dimethyl-2-[4-(1,3-dimethyl-(imidazol-1-ium)-2-ylazo)-phenylazo]-imidazol-1-ium.
1,4-Dimethyl-3-[4-(1,4-dimethyl-(triazol-2-ium)-3-ylazo)-phenylazo]-triazol-2-ium.
1-Methyl-2-[4-(1-methyl-(pyridin-1-ium)-2-ylazo)-phenylazo]-pyridin-1-ium.
1-Methyl-3-[4-(1-methyl-(pyridin-1-ium)-3-ylazo)-phenylazo]-pyridin-1-ium.
1,3-Dimethyl-2-[4-(3-methyl-(thiazol-3-ium)-2-ylazo)-phenylazo]-imidazol-1-ium.
1,4-Dimethyl-3-[4-(3-methyl-(thiazol-3-ium)-2-ylazo)-phenylazo]-triazol-2-ium.
1,3-Dimethyl-2-[4-(1,4-dimethyl-(triazol-2-ium)-3-ylazo)-phenylazo)-imidazol-1-ium.
1-Methyl-2-[4-(3-methyl-(thiazol-3-ium)-2-ylazo)-phenylazo]-pyridin-1-ium.
1-Methyl-3-[4-(3-methyl-(thiazol-3-ium)-2-ylazo)-phenylazo]-pyridin-1-ium.
1,3-Dimethyl-2-[4-(1-methyl-(pyridin-1-ium)-2-ylazo)-phenylazo]-imidazol-1-ium.

1,4-Dimethyl-3-[4-(1-methyl-(pyridin-1-ium)-2-ylazo)]-triazol-2-ium.
1,3-Dimethyl-2-[4-(1-(2-hydroxyethyl)-(pyridin-1-ium)-2-ylazo)-phenylazo]-imidazol-1-ium.
1,4-Dimethyl-3-[4-(1-(2-hydroxyethyl)-(pyridin-1-ium)-2-ylazo)-phenylazo]-triazol-2-ium.
1,3-Dimethyl-2-[4-(1-methyl-(pyridin-1-ium)-3-ylazo)-phenylazo]-imidazol-1-ium.
1,4-Dimethyl-3-[4-(1-methyl-(pyridin-1-ium)-3-ylazo)-phenylazo]-triazol-2-ium.
1,3-Dimethyl-2-[4-(1-(2-hydroxyethyl)-(pyridin-1-ium)-3-ylazo)-phenylazo]-imidazol-1-ium.
1,4-Dimethyl-3-[4-(1-(2-hydroxyethyl)-(pyridin-1-ium)-3-ylazo)-phenylazo]-triazol-2-ium.
1,3-Dimethyl-2-[4-(1,3-dimethyl-(imidazol-1-ium)-2-ylazo)-3-methoxyphenylazo]-imidazol-1-ium.
1,3-Dimethyl-2-[4-(1,4-dimethyl-(triazol-2-ium)-3-ylazo)-3-methoxyphenylazo]-imidazol-1-ium.
1, 3-Dimethyl-2-[4-(1-methyl-(pyridin-1-ium)-2-ylazo)-3-methoxyphenylazo]-imidazol-1-ium.

**14.** Zusammensetzung nach einem der vorhergehenden Ansprüche, wobei der oder die kationische(n) Diazofarbstoff (e) der Formel (I) in Konzentrationen von 0,001 bis 5 % und vorzugsweise 0,05 bis 2 Gew.-%, bezogen auf das Gesamtgewicht der Zusammensetzung, enthalten sind.

**15.** Zusammensetzung nach einem der vorhergehenden Ansprüche, die ferner eine Oxidationsbase enthält.

**16.** Zusammensetzung nach Anspruch 15, wobei die Oxidationsbase unter den *p*-Phenylendiaminen, Bis-phenylalkylendiaminen, p-Aminophenolen, o-Aminophenolen, heterocyclischen Basen und deren Additionssalzen mit einer Säure ausgewählt ist.

**17.** Zusammensetzung nach einem der Ansprüche 15 oder 16, worin die Oxidationsbase(n) in einer Menge von 0,001 bis 10 % und vorzugsweise 0,005 bis 6 % enthalten sind.

**18.** Zusammensetzung nach einem der vorhergehenden Ansprüche, die mindestens einen Kuppler enthält.

**19.** Zusammensetzung nach Anspruch 18, wobei der Kuppler unter den *m*-Phenylendiaminen, *m*-Aminophenolen, *m*-Dihydroxybenzolen, Naphthalinkupplern und heterocyclischen Kupplern und deren Additionssalzen und einer Säure ausgewählt ist.

**20.** Zusammensetzung nach einem der vorhergehenden Ansprüche, **dadurch gekennzeichnet, dass** sie ferner mindestens einen Direktfarbstoff enthält, der von den Farbstoffen der Formel (I) verschieden ist und unter den neutralen, sauren oder kationischen, nitrierten direktziehenden Benzolfarbstoffen, neutralen, sauren oder kationischen, direktziehenden Azofarbstoffen, direktziehenden Chinonfarbstoffen und insbesondere neutralen, sauren oder kationischen Anthrachinon-Farbstoffen, direktziehenden Azinfarbstoffen, direktziehenden Methin-Farbstoffen, direktziehenden Triarylmethanfarbstoffen, direktziehenden Indoaminfarbstoffen und direktziehenden natürlichen Farbstoffen ausgewählt ist.

**21.** Zusammensetzung nach einem der vorhergehenden Ansprüche, die ferner ein Oxidationsmittel und vorzugsweise Wasserstoffperoxid enthält.

**22.** Verfahren zum Färben von Keratinfasern und insbesondere menschlichen Keratinfasern, wie Haaren, **dadurch gekennzeichnet, dass** auf die Fasern mindestens eine Farbmittelzusammensetzung nach einem der Ansprüche 1 bis 14 aufgetragen wird.

**23.** Verfahren nach Anspruch 22, wobei die Farbmittelzusammensetzung ein Oxidationsmittel enthält.

**24.** Verfahren nach Anspruch 23, wobei das Oxidationsmittel bei der Anwendung mit der Farbmittelzusammensetzung vermischt wird.

**25.** Verfahren nach Anspruch 23, wobei das Oxidationsmittel in Form einer oxidierenden Zusammensetzung auf die Fasern aufgetragen wird, welche gleichzeitig mit der Farbmittelzusammensetzung oder getrennt davon anschließend aufgebracht wird.

**26.** Verfahren zum oxidativen Färben von Keratinfasern und insbesondere menschlichen Keratinfasern und besonders Haaren, **dadurch gekennzeichnet, dass** auf die Fasern mindestens eine Farbmittelzusammensetzung nach einem der Ansprüche 1 bis 14, die ferner mindestens eine Oxidationsbase und gegebenenfalls mindestens einen Kuppler enthält, in Gegenwart eines Oxidationsmittels aufgetragen wird.

**27.** Verfahren nach Anspruch 26, wobei das Oxidationsmittel bei der Anwendung mit der Farbmittelzusammensetzung vermischt wird.

**28.** Verfahren nach Anspruch 26, wobei das Oxidationsmittel in Form einer oxidierenden Zusammensetzung auf die Fasern aufgetragen wird, die gleichzeitig mit der Farbmittelzusammensetzung oder getrennt davon anschließend aufgebracht wird.

**29.** Vorrichtung mit mehreren Abteilungen oder "Kit" zum Färben mit mehreren Abteilungen, wobei eine erste Abteilung eine Zusammensetzung nach einem der Ansprüche 1 bis 20 und eine zweite Abteilung eine oxidierende Zusammensetzung enthält.

**30.** Dikationische Diazoverbindungen der Formel (I) nach einem der Ansprüche 1 bis 13.